(19) **Europäisches Patentamt / European Patent Office / Office européen des brevets**

(11) **EP 4 325 903 B1**

(12) # FASCICULE DE BREVET EUROPEEN

(45) Date de publication et mention de la délivrance du brevet:
**23.07.2025 Bulletin 2025/30**

(21) Numéro de dépôt: **23190079.6**

(22) Date de dépôt: **07.08.2023**

(51) Classification Internationale des Brevets (IPC):
*H04W 4/029* (2018.01)    *G01C 21/34* (2006.01)
*G01S 5/02* (2010.01)    *G06F 16/29* (2019.01)

(52) Classification Coopérative des Brevets (CPC):
**H04W 4/029; G01C 21/3461; G01S 5/02695; G01S 5/0278; G06F 16/29**

(54) **PROCÉDÉ DE DÉTERMINATION D'UN ITINÉRAIRE D'UN TERMINAL MOBILE À PARTIR DE DONNÉES RELATIVES À UNE PLURALITÉ D'ÉVÈNEMENTS RÉSEAU IMPLIQUANT LEDIT TERMINAL MOBILE, DISPOSITIF ET PROGRAMME D'ORDINATEUR CORRESPONDANT**

VERFAHREN ZUR BESTIMMUNG EINER ROUTE EINES MOBILEN ENDGERÄTS AUS DATEN ÜBER MEHRERE NETZWERKEREIGNISSE MIT DIESEM MOBILEN ENDGERÄT, VORRICHTUNG UND COMPUTERPROGRAMM DAFÜR

METHOD FOR DETERMINING A ROUTE OF A MOBILE TERMINAL FROM DATA RELATING TO A PLURALITY OF NETWORK EVENTS INVOLVING SAID MOBILE TERMINAL, CORRESPONDING DEVICE AND COMPUTER PROGRAM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **18.08.2022 FR 2208381**

(43) Date de publication de la demande:
**21.02.2024 Bulletin 2024/08**

(73) Titulaire: **Orange**
**92130 Issy-les-Moulineaux (FR)**

(72) Inventeurs:
• **RENAUD, Denis Xavier**
**92326 CHATILLON (FR)**
• **SCHOLLER, Rémy**
**92326 CHATILLON (FR)**
• **CHEN, Yunhao**
**92326 CHATILLON (FR)**

(74) Mandataire: **Vidon Brevets & Stratégie**
**16B, rue de Jouanet**
**BP 90333**
**35703 Rennes Cedex 7 (FR)**

(56) Documents cités:
**FR-A1- 3 046 006**

• **COLERI ERGEN SINEM ET AL: "RSSI-Fingerprinting-Based Mobile Phone Localization With Route Constraints", IEEE TRANSACTIONS ON VEHICULAR TECHNOLOGY, IEEE, USA, vol. 63, no. 1, 1 January 2014 (2014-01-01), pages 423 - 428, XP011537078, ISSN: 0018-9545, [retrieved on 20140113], DOI: 10.1109/TVT.2013.2274646**
• **LV JINHUA ET AL: "BSLoc: Base Station ID-Based Telco Outdoor Localization", 15 February 2019, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 206 - 219, ISBN: 978-3-319-10403-4, XP047502705**

## Description

### Domaine de l'invention

Le domaine de l'invention est celui de la localisation d'objets mobiles connectés à au moins un réseau de communication.

Plus précisément, l'invention concerne une méthode pour déterminer un itinéraire emprunté par un terminal mobile le long de routes d'un réseau de transport au moyen des données de signalisation collectées et les dispositifs, programmes d'ordinateurs et supports correspondants.

### Art antérieur et ses inconvénients

Les données de signalisation collectées par un opérateur en télécommunication au sein du ou des réseaux de communication qu'il opère lui permettent de connaître l'utilisation qui est faite par ses utilisateurs des ressources qu'il met à leur disposition. Fort de cette connaissance, un opérateur en télécommunication peut alors planifier des opérations de développement et de maintenance des équipements constitutifs des réseaux de communication qu'il opère, lui permettant de répondre aux besoins et aux attentes de ses utilisateurs.

Ces dernières années, avec le développement de l'Internet des Objets ou IoT (*Internet of Things)* et l'émergence des véhicules connectés, les opérateurs en télécommunications se sont aperçus que les données de signalisations en leur possession pouvaient intéresser d'autres acteurs et qu'elles devenaient alors un actif à valoriser.

Les données de signalisations de terminaux mobiles utilisés lors de déplacements présentent notamment un intérêt pour l'étude de la mobilité humaine, qu'il s'agisse par exemple de terminaux mobiles portés par un utilisateur ou de terminaux mobiles embarqués dans un véhicule.

Il existe de nombreuses techniques permettant d'estimer une situation de mobilité, et plus particulièrement un itinéraire, d'un terminal mobile. Parmi ces différentes techniques, certaines permettent d'estimer un itinéraire emprunté par un terminal mobile le long de routes d'un réseau de transport au moyen de données de signalisation. Selon ces techniques, on estime une position du terminal mobile, approximée par le centre d'une zone de couverture, ou cellule, d'une station de base à laquelle le terminal mobile est connecté. Pour cela, on utilise un partitionnement de Voronoï du territoire couvert par les cellules constitutives d'un réseau de communication radio. Avec ce partitionnement, chaque évènement réseau est positionné sur le centre de la cellule dans laquelle il intervient. De tels évènements sont horodatés ce qui permet de calculer une vitesse, et/ou une direction de déplacement connaissant les coordonnées des centres des cellules. Ces informations sont ensuite utilisées, en relation avec des graphes de réseaux de transport afin de déterminer l'itinéraire emprunté par le terminal mobile.

Cependant, de telles techniques présentent les limites suivantes propres aux partitionnements de Voronoï :

- toutes les cellules sont supposées omnidirectionnelles,

- les caractéristiques des cellules (puissance de rayonnement, hauteur et inclinaison des antennes de la station de base) ne sont pas prises en compte,

- le recouvrement des zones d'action des cellules n'est pas pris en compte,

- aucun a priori de localisation n'est utilisé.

Concernant le croisement de ces informations avec des graphes de réseaux de transport afin de déterminer l'itinéraire emprunté par le terminal mobile plusieurs approches sont connues.

L'approche probabiliste, basée sur les modèles de Markov à états cachés ou *Hidden Markov Models* ( HMM) qui considère la transition entre les événements est une approche des plus populaires notamment dans les applications de localisation et de détermination d'itinéraires comme Microsoft Bing Maps, OpenStreetMap ou encore Mapbox.

Un modèle de Markov à états cachés définit des états cachés, dans le cas présent des segments de routes ou des nœuds d'un réseau de transport, et des états observables, les événements réseaux impliquant un terminal mobile. L'idée d'une telle approche probabiliste est d'associer un segment de route à chaque événement réseau impliquant un terminal mobile à l'aide de deux types de probabilités : la probabilité de connexion (aussi appelée probabilité d'émission dans la présente demande) et la probabilité de transition. La probabilité de connexion évalue la probabilité du terminal mobile considéré de se connecter à une cellule d'un réseau de communication radio sachant qu'il se trouve sur un segment de route donné. La probabilité de transition évalue la probabilité de passage du dernier segment de route avant un segment de route donné au segment de route donné. Une fois ces probabilités obtenues, la séquence de segments de routes la plus probable est sélectionnée comme résultat du modèle.

Empiriquement, les modèles de Markov à états cachés supposent que les routes les plus proches d'une position donnée d'un terminal mobile, ou de la position de la station de base servant le terminal mobile lorsque l'estimation de la positon du terminal mobile est incertaine, ont des probabilités de connexion (ou d'émission) plus importantes. Dans de nombreux cas, l'erreur de position spatiale, qui est obtenue au moyen de données GPS *(Global Positioning System)* est modélisée comme une distribution gaussienne de moyenne nulle. Les probabilités de connexion (ou d'émission) suivent donc également une distribution gaussienne.

Pour la probabilité de transition, il est souvent supposé que la distance entre deux états observables est proche de la distance sur route entre projections de ces deux états observables sur le réseau routier. La probabilité de transition est ensuite modélisée selon une loi exponentielle en fonction de la différence entre ces deux distances.

Lorsque la position du terminal mobile est obtenue au moyen de données collectées auprès du réseau de communication radio auquel le terminal mobile est attaché, les itinéraires empruntés par un terminal mobile déterminés au moyen de modèles de Markov à états cachés sur la base de ces informations sont très incertains. Cela est dû en partie au fait que les cellules d'un réseau de communication radio couvrant parfois de grandes zones, e.g. supérieures à 5km de rayon, les estimations de position obtenues sont très incertaines et les estimations de vitesse et de direction de déplacement qui en découlent le sont donc aussi.

L'article COLERI ERGEN SINEM ET AL : « RSSI-Fingerprinting-Based Mobile Phone Localization With Route Constraints », IEE TRANSACTIONS ON VEHICULAR TECHNOLOGY, vol.63, no.1, pages 423-428, XP011537078 décrit un dispositif de localisation de téléphone mobile basé sur une empreinte RSSI avec une contrainte de route. La demande FR 3 046 006 A1 décrit un procédé d'estimation de trajectoires utilisant des données mobiles. L'article LV JINHUA ET AL : « BSLoc : Base Station ID-Based Telco Outdoor Localization », ADVANCES IN DATABASES AND INFORMATION SYSTEMS ; PAGE(S) 206-219, XP047502705 décrit une technique de localisation basée sur un identifiant de station de base en extérieur. Ces documents relèvent de l'arrière-plan technologique.

Il existe donc un besoin d'une solution ne présentant pas l'ensemble des inconvénients ci-dessus pour identifier un itinéraire emprunté par un terminal mobile le long de routes d'un réseau de transport au moyen de données de signalisation.

**Exposé de l'invention**

L'invention répond à ce besoin en proposant un procédé de détermination d'un itinéraire d'un terminal mobile à partir de données relatives à une pluralité d'évènements réseau impliquant ledit terminal mobile tel que défini dans la revendication 1.

Dans la présente demande, on entend par événement réseau tout évènement donnant lieu à une émission ou une réception de données de signalisation entre un terminal mobile et une station de base d'un réseau de communication, comme l'établissement d'une communication entre le terminal mobile et la station de base par exemple en cas d'appel entrant ou sortant ou en cas d'émission ou de réception d'un message court ou SMS, le déclenchement d'une procédure d'attachement à la station de base, la transmission d'un message de « paging » à destination du terminal mobile lui demandant de sortir d'un état de veille, etc.

La présente solution aide à s'affranchir de toutes ou partie des contraintes de l'état de l'art en utilisant une carte de vraisemblance de prise en charge par une station de base afin de calculer une probabilité de connexion du terminal mobile à une station de base donnée.

Plus particulièrement, une telle carte de vraisemblance de prise en charge par une station de base représente la probabilité qu'a un terminal mobile de se connecter à une station de base à un endroit de la zone de couverture de la station de base. Une telle carte de vraisemblance ne correspond pas directement à une densité spatiale de probabilité de présence du terminal mobile.

En effet, ces cartes de vraisemblance de prise en charge par une station de base offrent l'intérêt de prendre en compte la direction des cellules, leurs caractéristiques de rayonnement, le recouvrement de leurs zones d'actions contrairement à certaines techniques de l'état de l'art et plus particulièrement à certaines techniques utilisant les partitionnements de Voronoï.

Plus particulièrement, le premier événement et le deuxième événement sont sélectionnés parmi une pluralité d'évènements réseau impliquant le terminal mobile, intervenus pendant une première fenêtre temporelle. Dans certains modes de réalisation, le premier événement et le deuxième événement sont deux événements consécutifs.

Cela rend possible une estimation des conditions de mobilité d'un terminal mobile sur une fenêtre temporelle de durée courte de l'ordre d'une ou plusieurs dizaines de minutes, par exemple inférieure ou égale à 15 minutes, ce qui n'est pas le cas des techniques de l'état de l'art qui ont des difficultés à extraire une information pertinente sur des fenêtre temporelles de durées courtes du fait de leur mauvaise prise en compte des incertitudes de localisation des terminaux mobiles. De plus, cela rend la présente solution compatible avec les dispositions législatives relatives à la rétention d'historique d'évènements relatifs à des terminaux mobiles limitant la durée de rétention d'historique (par exemple une limitation à durée de rétention de l'ordre de 15 mn), à l'inverse de certaines solutions de l'état de l'art.

La présente solution propose d'utiliser un enchainement de données de mobilité relatives à un terminal mobile en association avec un ou plusieurs graphes de réseaux de transport, e.g. réseau routier ou autoroutier, réseau ferré, réseau métropolitain, etc., afin de déterminer un itinéraire emprunté par le terminal mobile. Pour cela, la présente solution met en œuvre un modèle de Markov à états cachés dans lequel les états observés correspondent aux données relatives aux évènements réseau impliquant le terminal mobile et les états cachés correspondent aux segments de route des graphes des réseaux de transport. Exprimé en d'autres termes, la solution proposée est adaptée à l'incertitude spatiale d'un réseau de communication radio et à la sporadicité des données relatives aux évènements réseau.

Dans certains modes de réalisation, l'itinéraire sélectionné est celui pour lequel le produit de l'ensemble des probabilités de connexion (d'émission) avec l'ensemble des probabilités de transition précédemment déterminées est le plus élevé.

Dans certains modes de réalisation, la probabilité de connexion (ou d'émission) $P(A \mid s_1)$ pour un événement réseau donné est déterminée selon la formule suivante :

$$P(A \mid s_1) = \frac{\sum_{j=1}^{n} P(A \mid p_j)}{n}$$

dans laquelle $A$ représente la première station de base impliquée dans le premier événement, $s_1$ représente le premier segment de route candidat se situant dans la zone de couverture de ladite première station de base, $p_j$ représente un pixel d'une carte de vraisemblance représentant une probabilité de connexion dudit terminal mobile à la première station de base lorsque le terminal est situé sur un pixel de ladite carte de vraisemblance, et n représente le nombre de pixels de ladite carte de vraisemblance de poids non nul traversés par le premier segment de route candidat $s_1$.

Ainsi, cette probabilité de connexion (ou d'émission) est déterminée sur la base de données de localisation du terminal mobile plus précises et plus pertinentes que certaines solutions de l'état de l'art.

Dans certains modes de réalisation, une sélection dudit au moins un premier segment de route candidat en tenant compte d'une distance entre ledit au moins un premier segment de route candidat et au moins un segment de route candidat à un instant t0 antérieur à l'instant t1

Plus particulièrement, dans certains modes de réalisation, le premier segment de route candidat est sélectionné parmi les segments de route situés à une distance inférieure ou égale à une première distance, dit distance de tolérance de connectivité, de l'ensemble des segments de route candidats à un instant t0 antérieur à l'instant t1.

Dans certains modes de réalisation, la valeur de la première distance de tolérance de connectivité peut tenir compte d'une densité de répartition géographique des stations de base et d'un rayon médian d'une zone de couverture de stations de base à proximité de ladite première station de base.

Dans certains modes de réalisation, le procédé peut comprendre une étape de sélection du premier segment de route candidat comprenant :

- une détermination d'une enveloppe convexe constituée de l'ensemble des segments de route candidats à un instant t0 antérieur à l'instant t1,
- une sélection dudit au moins un premier segment de route candidat situé à une distance inférieure ou égale à un premier seuil, dit seuil de tolérance de connectivité.

Cela peut aider, au moins dans certains modes de réalisation, à réduire le nombre de segments de route candidats et ainsi réduire le temps de calcul et /ou la puissance de calcul requise.

Dans certains modes de réalisation, la valeur du seuil de tolérance de connectivité est le produit d'un coefficient de pondération représentatif d'une densité de répartition géographique des stations de base avec d'un rayon médian d'une zone de couverture de station de base connaissant un rayon d'une zone de couverture d'au moins une station de base située à une distance temporelle de ladite première station de base inférieure ou égale à un deuxième seuil.

Ainsi, plus la densité de présence des stations de base est faible et donc les stations de base éloignées entre elles, comme cela est le cas dans la campagne, plus le coefficient de pondération est grand. A contrario, plus la densité de présence des stations de base est grande et donc les stations de base proches entre elles, comme cela est le cas dans les zones urbaines, plus le coefficient de pondération est faible.

Dans certains modes de réalisation, la probabilité de connexion (ou d'émission) est pondérée au moyen d'un coefficient de pénalité représentatif d'une déviation d'une direction du premier segment de route candidat avec une direction de référence, le coefficient de pénalité tendant vers zéro à mesure que la déviation entre la direction du premier segment de route candidat et la direction de référence augmente.

Cela peut aider, au moins dans certains modes de réalisation, à favoriser les segments de route candidats dont la déviation par rapport une direction de référence est la plus faible.

Dans certains modes de réalisation, la probabilité de transition $P(s_2 \mid s_1)$ pour un événement réseau donné est déterminée selon la formule suivante :

$$P(s_2 \mid s_1) = \int_{d_{min}}^{d_{max}} f(u)du$$

dans laquelle : $s_1$ représente le premier segment de route candidat se situant dans la zone de couverture de ladite première station de base, $s_2$ représente le deuxième segment de route candidat se situant dans la zone de couverture de ladite deuxième station de base, $f(u)$ représente une densité de distribution de distances entre les zones de couverture de la première station de base et de la deuxième station de base, $d_{min}$ représente la distance minimale séparant le premier segment de route candidat et le deuxième segment de route candidat sur un graphe représentant ledit réseau de transport et $d_{max}$ représente la somme de $d_{min}$ avec la longueur du premier segment de route candidat et la longueur du deuxième segment de route candidat

Selon cet aspect du présent procédé, la probabilité de transition est déterminée en prenant en compte une densité de distribution de distances entre les zones de couverture de la première station de base et de la deuxième station de base. Un tel choix peut aider, au moins dans certains modes de réalisation, à prendre en compte une incertitude de déplacement du terminal mobile inhérente au réseau de communication radio. En effet, une incertitude quant à la localisation des cellules d'un réseau de communication radio peut entrainer, dans certains cas une incertitude quant à la distance parcourue par un terminal mobile au sein de ce réseau de communications radio.

Ainsi, cette densité de distribution de distances concerne des déplacements effectifs du terminal mobile, en d'autres mots. Cela correspond à une situation dans laquelle le terminal mobile a changé de station de base de rattachement consécutivement à un déplacement (effectif), excluant les situations dans lesquelles le terminal mobile n'a pas quitté la zone de couverture d'une station de base et est donc immobile du point de vue du réseau de communications radio.

Dans certains modes de réalisation, la probabilité de transition $P(s_2 \mid s_1)$ pour un événement réseau donné est déterminée selon la formule suivante :

$$P(s_2 \mid s_1) = \int_{v_{min}}^{v_{max}} f(v)dv$$

dans laquelle $s_1$ représente le premier segment de route candidat se situant dans la zone de couverture de ladite première station de base, $s_2$ représente le deuxième segment de route candidat se situant dans la zone de couverture de ladite deuxième station de base, $f(v)$ représente une densité de vitesse moyenne de déplacement du terminal mobile, $v_{min} = d_{min}/\Delta t$ où $d_{min}$ représente la distance minimale séparant le premier segment de route candidat et le deuxième segment de route candidat sur un graphe représentant ledit réseau de transport et $v_{max} = d_{max}/\Delta t$ où $d_{max}$ représente la somme de $d_{min}$ avec la longueur du premier segment de route candidat et la longueur du deuxième segment de route candidat et où $\Delta t = t2-t1$..

Dans certains modes de réalisation, la probabilité de transition $P(s_2 \mid s_1)$ pour un événement réseau donné est déterminée selon la formule suivante :

$$P(s_2 \mid s_1) = \int_{\theta_{min}}^{\theta_{max}} f(\theta)d\theta$$

dans laquelle $s_1$ représente le premier segment de route candidat se situant dans la zone de couverture de ladite première station de base, $s_2$ représente le deuxième segment de route candidat se situant dans la zone de couverture de ladite deuxième station de base, $f(\theta)$ représente une densité de direction moyenne de déplacement du terminal mobile entre les zones de couverture de la première station de base et de la deuxième station de base, $\theta_{min}$ représente la borne inférieure d'une intersection d'un premier secteur angulaire définissant des directions de déplacement possibles pour le terminal mobile avec un deuxième secteur angulaire définissant un angle maximum entre une première extrémité du premier segment de route candidat et une deuxième extrémité du deuxième segment de route candidat et $\theta_{max}$ représente la borne supérieure de l'intersection du premier secteur angulaire et du deuxième secteur angulaire.

Dans certains modes de réalisation, la probabilité de transition est déterminée en fonction d'au moins deux densités représentatives d'un déplacement du terminal mobile parmi la densité de distribution de distances entre les zones de couverture de la première station de base et de la deuxième station de base $f(u)$, la densité de vitesse moyenne de déplacement du terminal mobile $f(v)$ et la densité de direction moyenne de déplacement du terminal mobile entre les zones de couverture de la première station de base et de la deuxième station de base $f(\theta)$.

Cela peut aider, au moins dans certains modes de réalisation, à améliorer la détermination de l'itinéraire emprunté par le terminal mobile puisque les données fournies en entrée du modèle de Markov à états cachés prennent en compte de nombreux aspects du déplacement d'un terminal mobile tels que sa vitesse de déplacement ainsi que la direction de ce déplacement et la distance parcourue.

Dans certains modes de réalisation, la probabilité de transition est pondérée en fonction du nombre d'intersections de segments de route du réseau de transport rencontrés le long de l'itinéraire candidat.

Dans certains modes de réalisation, la probabilité de transition est pondérée au moyen d'un coefficient de pénalité représentatif d'un nombre d'intersections de segments de route du réseau de transport rencontrés le long de l'itinéraire candidat, le coefficient de pénalité tendant vers zéro à mesure que le nombre d'intersections augmente.

Cela peut aider, au moins dans certains modes de réalisation, à favoriser les transitions entre segments de route candidats impliquant le moins de nœuds possible.

L'invention a également pour objet un dispositif capable de déterminer un itinéraire emprunté par un terminal mobile à partir de données relatives à une pluralité d'évènements réseau impliquant ledit terminal mobile telle que défini dans la revendication 2.

Un tel dispositif, adapté à mette en œuvre le procédé objet de l'invention dans n'importe lequel de ses modes de réalisation ou selon n'importe quelle combinaison des modes de réalisation décrite dans le présent document, peut par exemple être embarqué dans un serveur appartenant à l'opérateur en télécommunication opérant le réseau de communication radio auquel appartiennent les stations de base.

L'invention concerne aussi un produit programme d'ordinateur comprenant des instructions de code de programme pour la mise en œuvre d'un procédé tel que décrit précédemment, selon l'un quelconque de ses modes de réalisation, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé selon l'invention tel que décrit ci-dessus selon l'un quelconque de ses modes de réalisation.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé objet de l'invention précité.

## Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :

**[fig. 1]** : cette figure représente un diagramme des étapes d'un procédé de détermination d'un itinéraire emprunté par un terminal mobile à partir de données relatives à une pluralité d'évènements réseau impliquant ledit terminal mobile ;

**[fig. 2A]** : cette figure représente un exemple d'une carte de vraisemblance de prise en charge par une cellule associée à la station de base obtenue avec un *a priori* de présence uniforme du mobile ;

**[fig. 2B]** : cette figure représente un exemple d'une carte de vraisemblance de prise en charge par une cellule obtenue avec un *a priori* de présence du mobile le long d'un axe routier et d'une ligne de train à grande vitesse ;

**[fig. 3]** : cette figure représente la notion de rayon d'action d'une station de base ;

**[fig. 4]** : cette figure représente l'enchainement d'étapes conduisant à l'obtention d'une densité de distribution de distances entre les zones de couverture d'une première station de base $A_1$ et d'une deuxième station de base $A_2$ ;

**[fig. 5]** : cette figure représente l'enchainement d'étapes conduisant à l'obtention d'une densité de vitesse moyenne de déplacement du terminal mobile ;

**[fig. 6]** : cette figure représente l'enchainement d'étapes conduisant à l'obtention d'une densité de direction moyenne de déplacement du terminal mobile entre les zones de couverture de la première station de base $A_1$ et de la deuxième station de base $A_2$ ;

[fig. 7A] : cette figure représente une situation dans laquelle le terminal mobile est immobile du point de vue du réseau de communications radio ;

[fig. 7B] : cette figure représente une situation dans laquelle le terminal mobile est mobile du point de vue du réseau de communications radio ;

[fig. 8] : cette figure représente un dispositif apte à mettre en œuvre certaines étapes de la solution précédemment décrite.

**Description détaillée de modes de réalisation de l'invention**

Le principe général de l'invention repose sur l'utilisation de données de signalisation collectées par un opérateur en télécommunications opérant au moins un réseau de communication radio pour déterminer un itinéraire emprunté par un terminal mobile le long de routes d'un ou plusieurs réseaux de transport. Plus particulièrement, dans au moins certains des modes de réalisation détaillés, l'une des données de signalisation utilisée dans la présente solution peut être une carte de vraisemblance de prise en charge par une station de base. Comme déjà exposé ci-dessus (partie « exposé de l'invention »), une telle carte de vraisemblance représente la probabilité qu'a un terminal mobile de se connecter à une station de base à un endroit de la zone de couverture de la station de base. Ainsi, dans au moins certains modes de réalisation de la présente méthode, l'utilisation d'une carte de vraisemblance peut aider à améliorer les résultats obtenus, par rapport aux solutions de l'art antérieur, en termes par exemple de fiabilité, de précision et/ou de réalisme.

Une telle connaissance peut aussi aider par exemple à une meilleure classification des différents types de véhicules de transport de marchandises et de leurs usages, à une meilleure gestion des flottes de vélos ou de trottinettes mises à disposition du public, à un meilleur suivi des colis postaux équipés de traceurs connectés, et/ou à une meilleure planification du flux de voyageurs dans les transports en commun, etc.

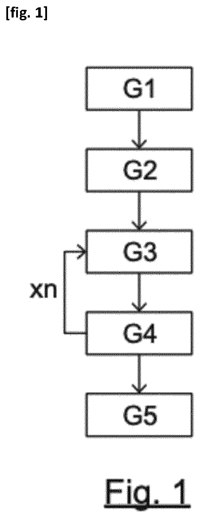

La [FIG. 1] représente un diagramme des étapes d'un procédé de détermination d'un itinéraire emprunté par un terminal mobile à partir de données relatives à une pluralité d'évènements réseau impliquant ledit terminal mobile.

Un tel procédé repose sur la mise en œuvre d'une chaine de Markov à états cachés. La présente solution consiste alors à utiliser un enchainement de données de mobilité relatives à un terminal mobile en association avec un ou plusieurs graphes de réseaux de transport, e.g. réseau routier ou autoroutier, réseau ferré, réseau métropolitain, etc., afin de déterminer un itinéraire emprunté par le terminal mobile. Pour cela, le procédé met en œuvre un modèle de Markov à états cachés dans lequel les états observés correspondent aux données relatives aux évènements réseau impliquant le terminal mobile et les états cachés correspondent à des segments de route de graphes des réseaux de transport.

Dans une étape G1, des données de signalisations sont collectées, par exemple au moyen de sondes disposées dans un réseau de communication radio. Ces données de signalisation sont ensuite mémorisées dans une ou plusieurs bases de données. Dans une telle base de données, chaque entrée correspond par exemple à un événement réseau.

Dans les modes de réalisation détaillés, les données de signalisation collectées pour un évènement réseau comprennent entre autres :

- un identifiant d'un terminal mobile (par exemple un pseudonyme identifiant de façon unique le terminal mobile pour l'opérateur),

- des données d'horodatage de la survenue de l'événement réseau,

- un identifiant de la station de base ou de la cellule qui est associée à l'évènement réseau.

Dans les modes de réalisation détaillés, des données de signalisation enrichies peuvent également être mémorisées dans la base de données. Ainsi, un événement réseau peut également être associé à une carte de vraisemblance de prise en charge par la cellule associée à la station de base avec laquelle le terminal mobile a interagi lors de la survenue de l'événement réseau.

Une carte de vraisemblance de prise en charge par une cellule associée à une station de base, peut par exemple être obtenue par simulation. Sachant que la zone de couverture d'une station de base est constituée d'une pluralité de cellules, une pluralité de cartes de vraisemblance de prise en charge peut être associée à une même station de base. Par exemple, pour une station de base comprenant une antenne $A_i$, une carte de vraisemblance de prise en charge peut représenter une probabilité $P(A_i|(X, Y) \in p_k)$ de connexion du terminal mobile à l'antenne $A_i$ (avec $p_k$ l'un des pixels de la carte), au point de coordonnées $(X, Y)$ sachant que le terminal mobile est situé sur le pixel $p_k$.

La carte géographique représentative de la zone de couverture de la station de base étant partitionnée en pixels, la formule des probabilités totales permet d'obtenir la probabilité, pour un terminal mobile de se trouver sur le pixel $p_k$ sachant qu'il est connecté à l'antenne $A_i$ de la station de base :

$$P\big((X,Y) \in p_k | A_i\big) = \frac{P\big((X,Y) \in p_k\big)P(A_i|(X,Y) \in p_k)}{P(A_i)} = \frac{P\big((X,Y) \in p_k\big)P(A_i|(X,Y) \in p_k)}{\sum_{k'} P\big((X,Y) \in p_{k'}\big)P(A_i|(X,Y) \in p_{k'})}$$

ce qui équivaut, en notant $P((X, Y) \in p_k)$ = Prior(k) *l'a priori* de présence du mobile sur le pixel $p_k$, à

$$P\big((X,Y) \in p_k | A_i\big) = \frac{\text{Prior}(k)P(A_i|(X,Y) \in p_k)}{\sum_{k'} \text{Prior}(k')P(A_i|(X,Y) \in p_{k'})} .$$

A partir de ces probabilités et en choisissant un *a priori* de présence du terminal mobile on obtient une carte de densité spatiale de présence.

Un tel *a priori* peut être choisi, par exemple, parmi une présence uniforme, une présence le long des axes routiers, et/ou une présence en fonction d'une densité de population, etc. Une telle carte géographique représentative de la zone de couverture de la station de base est, par exemple, obtenue par simulations. L'a *priori* de présence du mobile choisi peut dépendre de la population de terminaux mobiles que l'on souhaite surveiller. Selon un premier exemple, on peut choisir un *a priori* de présence du mobile lorsque l'on souhaite déterminer la distance parcourue sur l'ensemble de la zone de couverture de la station de base. Selon un second exemple, on peut choisir un *a priori* de présence le long des axes routiers si l'on souhaite déterminer la distance parcourue de terminaux mobiles embarqués dans des véhicules. Selon un troisième exemple, on peut choisir un *a priori* de présence en fonction d'une densité de population si l'on souhaite surveiller un mouvement de terminaux mobiles dans des lieux d'habitation.

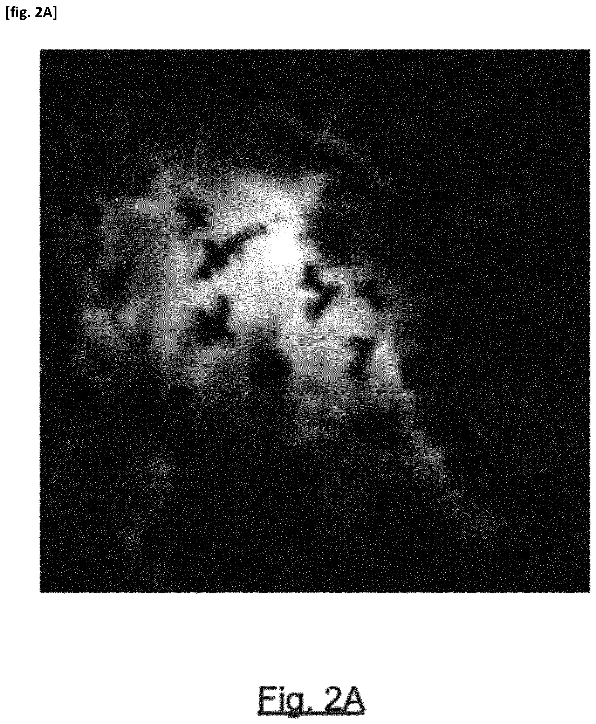

Un exemple d'une carte de vraisemblance de prise en charge par une cellule associée à la station de base obtenue avec un *a priori* de présence uniforme du mobile est représenté à la **[FIG. 2A]**.

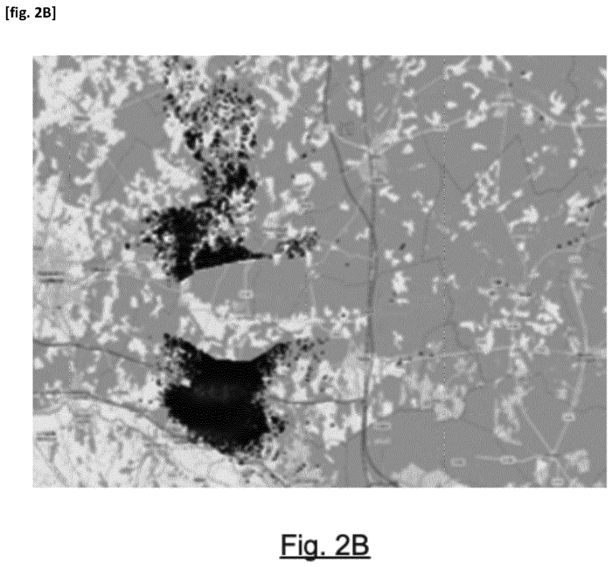

Un autre exemple d'une carte de vraisemblance de prise en charge par une cellule obtenue avec un *a priori* de présence du mobile le long d'un axe routier et d'une ligne de train à grande vitesse est représenté à la **[FIG. 2B]**.

Dans certains modes de réalisation, un événement peut être également associé, dans la base de données, à une valeur d'un rayon d'action d'une antenne de la station de base correspondante. Ce rayon d'action peut par exemple être exprimé en mètres. Un tel rayon d'action peut aller de quelques dizaines de mètres à plusieurs centaines de mètres.

Ainsi, pour une cellule d'une station de base (par exemple chaque cellule de la station de base), il peut être possible de définir un rayon d'action R tel que la probabilité de présence d'un terminal mobile dans un disque de rayon R autour du centre de cette cellule sachant que la probabilité de la survenue d'un événement réseau à un instant considéré est supérieure ou égale à une première probabilité (telle que 85% dans l'exemple détaillé). Un tel événement réseau est, par exemple, une connexion d'un terminal mobile à une antenne de la station de base servant la cellule considérée à un instant donné.

Le rayon d'action R peut par exemple dépendre notamment de la technologie utilisée (selon qu'elle est conforme aux normes de télécommunications de 2ème, 3ème, 4ème (LTE) ou 5ème générations) et/ou de la nature de zone géographique concernée, e.g. rurale, urbaine ou périurbaine.

Autrement dit, pour une antenne $A_i$ dont les coordonnées sur la carte géographique sont $(x_i, y_i)$, ayant un rayon d'action $R_i$, et en notant $D_{R_i}$ le disque de rayon $R_i$ centré sur le centre de la cellule considérée, on a :
$P((X, Y) \in D_{R_i}|A_i) \geq 85\%$ en notant (X, Y) le couple de variables aléatoires donnant la position du terminal mobile à l'instant $t_i$.

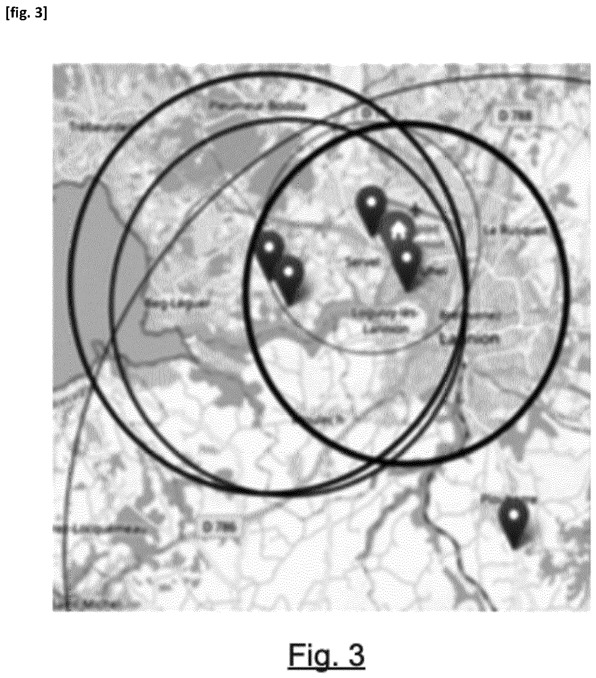

La **[FIG. 3]** illustre cette notion de rayon d'action.

Le présent procédé repose sur l'utilisation de données de signalisation relatives à des terminaux mobiles, et donc à leurs utilisateurs. Aussi, dans certains modes de réalisation sa mise en œuvre se doit de respecter des contraintes règlementaires d'anonymisation, et/ou de pseudonymisation, des données. Ces contraintes peuvent de plus parfois imposer des délais (relativement brefs) d'anonymisation, et/ou de pseudonymisation, des données. Ainsi, dans certains modes de réalisation, les calculs à effectuer utilisent des données de signalisation dont l'historique (i.e. la conservation) ne doit pas excéder une certaine durée. Une telle durée, ou fenêtre temporelle, peut être d'une ou plusieurs dizaines de minutes selon les modes de réalisation, par exemple de 15 minutes. Les calculs eux-mêmes doivent donc être effectués dans un temps inférieur à cette durée.

Dans une étape G2, un ou plusieurs graphes de réseaux de transport, tels que des cartes de réseaux routiers ou autoroutiers, réseau ferré, réseau métropolitain, etc. correspondant à une zone géographique dans laquelle le terminal mobile s'est déplacé sont obtenues.

Dans une étape G3, une probabilité de connexion (ou d'émission) $P(A_1 | s_1)$ pour un premier événement réseau E1 est déterminée au moyen de la formule suivante :

$$P(A_1 \mid s_1) = \frac{\sum_{j=1}^{n} P(A \mid p_j)}{n}$$

dans laquelle $A_1$ représente la station de base impliquée dans le premier événement réseau E1, $s_1$ représente un segment de route candidat se situant dans la zone de couverture de la station de base $A_1$, $p_j$ représente un pixel de la carte de vraisemblance représentant une probabilité de connexion dudit terminal mobile à la station de base $A_1$ lorsque le terminal est situé sur un pixel de cette carte de vraisemblance, et n représente le nombre de pixels de la carte de vraisemblance de poids non nul traversés par le segment de route candidat $s_1$. Un tel segment de route candidat $s_1$ est par exemple une section de route ou d'autoroute, une section entre deux stations de métro, etc.

En d'autres mots, $P(A_1 \mid s_1)$ représente la moyenne des probabilités de connexion du terminal mobile à la station de base $A_1$ sachant que le terminal mobile se trouve, à l'instant t1 auquel l'événement réseau E1 est survenu, sur un pixel de la carte de vraisemblance traversé par le segment de route candidat $s_1$

Dans certains modes de réalisation, afin de réduire le temps de calcul, préalablement au calcul de la probabilité de connexion (ou d'émission) $P(A_1 \mid s_1)$, il peut être procédé à la sélection de segments de routes candidats $s_i$.

Pour cela, dans un premier temps, une enveloppe convexe constituée d'un ensemble des segments de route candidats à un instant t0 antérieur à l'instant t1 est déterminée.

Dans un second temps, une valeur d'un seuil de tolérance de connectivité STC est calculée, par exemple comme étant le produit d'un coefficient de pondération $\omega$ représentatif d'une densité de répartition géographique des stations de bases avec d'un rayon médian d'une zone de couverture de station de base connaissant le rayon d'une zone de couverture d'au moins une station de base située à une distance temporelle $\delta$ de la station de base considérée inférieure ou égale à un deuxième seuil S. Une valeur de $\delta$ permettant la détermination d'une valeur pertinente du seuil de tolérance de connectivité STC est par exemple 15 minutes.

Ainsi, plus la densité de présence des stations de base est faible et donc les stations de base éloignées entre elles, comme cela est le cas dans la campagne, plus le coefficient de pondération $\omega$ est grand. A contrario, plus la densité de présence des stations de base est grande et donc les stations de base proches entre elles, comme cela est le cas dans les zones urbaines, plus le coefficient de pondération $\omega$ est faible.

Sont alors sélectionnés comme segments de route candidat pour l'événement réseau E1 l'ensemble des segments de route candidats situés à une distance de l'enveloppe connexe constituée de l'ensemble des segments de route candidats à un instant t0 inférieure ou égale à une première distance de tolérance de connectivité STC.

Afin d'améliorer la précision du calcul de la probabilité de connexion (ou d'émission), la probabilité de connexion peut être pondérée au moyen d'un coefficient de pénalité représentatif d'une déviation d'une direction d'un segment de route candidat $s_i$ avec une direction de référence $\theta_{model}$, le coefficient de pénalité tendant vers zéro à mesure que la déviation entre la direction du segment de route candidat $s_i$ considéré et la direction de référence $\theta_{model}$ augmente.

A titre d'exemple, la loi mathématique liant la valeur du coefficient de pénalité avec la valeur de la déviation entre la direction du segment de route candidat $s_i$ considéré et la direction de référence $\theta_{model}$ est donnée par la formule suivante :

$$y = \lambda\, e^{-\lambda x}$$

où $y$ correspond à la valeur du coefficient de pénalité, $x$ à la valeur de la déviation entre la direction du segment de route candidat $s_i$ considéré divisée par un angle de 45° et la direction de référence $\theta_{model}$ et $\lambda$ une constante. Dans la suite du présent document il est considéré que $\lambda$ vaut 1. Bien entendu, $\lambda$ peut prendre d'autres valeurs en fonction du cas d'espèce. De même la valeur l'angle peut être différente de 45°. La valeur de l'angle peut être choisie afin que la valeur du membre $e^{-\lambda x}$ ne chute pas abruptement lorsque la déviation augmente. Les performances obtenues s'en trouvent améliorées.

Afin de réduire davantage le nombre de segments de route candidats pour un événement réseau donné E1, une fois une probabilité de connexion (ou d'émission) calculée pour chacun des segments de route candidats, ces derniers peuvent être ordonnés par ordre de probabilités de connexion croissantes. Sont alors sélectionnés les n segments de route candidats présentant les probabilités de connexion les plus élevées. Le nombre n peut par exemple être déterminé de manière arbitraire par application de la formule suivante :

$$n = \max(15,\ ceil(n1/n2))$$

où $n1$ est le nombre de segments de route candidats pour l'événement réseau E1, le nombre n2 est choisi de manière arbitraire, *ceil* est la fonction qui arrondit au nombre supérieur. Le choix de la valeur du nombre n2, ici 10 par exemple, impacte les performances obtenues. Ainsi, selon les cas de figure rencontrés, une autre valeur que 10, plus petite ou plus grande peut aider à améliorer les performances.

A l'issue de l'étape G3, une probabilité de connexion (ou d'émission) a été calculée pour l'ensemble des segments de route candidats pour un événement réseau donné.

Dans une étape G4, une probabilité de transition $P(s_2 \mid s_1)$ entre un premier segment de route candidat correspondant à un premier événement réseau E1 et un deuxième segment de route candidat correspondant à un deuxième événement réseau E2 survenant à un instant t2 et impliquant une deuxième station de base $A_2$ est déterminée.

Dans une première implémentation, la probabilité de transition $P(s_2 \mid s_1)$ est déterminée de la manière suivante :

$$P(s_2 \mid s_1) = \int_{d_{min}}^{d_{max}} f(u)du$$

dans laquelle $s_1$ représente le segment de route candidat $s_1$ se situant dans la zone de couverture de la station de base $A_1$, $s_2$ représente le deuxième segment de route candidat se situant dans la zone de couverture de la station de base $A_2$, $f(u)$ représente une densité de distribution de distances entre les zones de couverture de la première station de base $A_1$ et de la deuxième station de base $A_2$, $d_{min}$ représente la distance minimale sur route séparant le segment de route candidat $s_1$ et le deuxième segment de route candidat $s_2$ et $d_{max}$ représente la somme de $d_{min}$ avec la longueur du premier segment de route candidat $s_1$ et la longueur du deuxième segment de route candidat $s_2$. En d'autres termes, $d_{max}$ représente la distance maximale sur route séparant le premier segment de route candidat $s_1$ et le deuxième segment de route candidat.

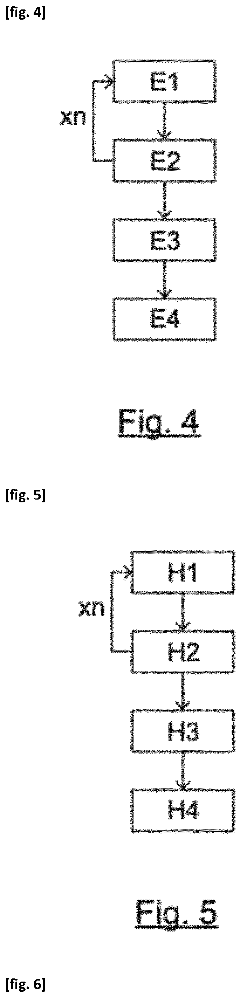

Une telle densité de distribution de distances entre les zones de couverture de la première station de base $A_1$ et de la deuxième station de base $A_2$ $f(u)$ est obtenue de la manière suivante en référence à la **[Fig. 4].**

Lors d'une première étape E1, un premier évènement réseau ER1 et un deuxième événement réseau ER2 sont sélectionnés parmi une pluralité d'événements réseau $ER_i$ impliquant le terminal mobile. Une telle sélection consiste à prendre l'ensemble des couples d'évènements réseau tels que les deux évènements réseau ER1 et ER2 constitutifs d'un couple d'événements réseau sont présents dans la fenêtre temporelle considérée, qu'ils sont séparés d'une durée au moins égale à une certaine durée (dite minimale), par exemple 5 minutes, et sont tels que l'événement réseau ER2 est postérieur à l'événement réseau ER1.

Le premier et le deuxième événement réseau ER1, ER2 interviennent respectivement aux instants $t_1$ et $t_2$ et impliquent les antennes $A_1$ et $A_2$ portées par deux stations de base qui peuvent être soit différentes, soit les mêmes.

Pour $i \in \{1, 2\}$ on note $(X_i, Y_i)$ les variables aléatoires donnant respectivement la longitude et la latitude du terminal mobile à l'instant $t_i$.

Dans la suite du document, les hypothèses suivantes sont posées :

- les variables aléatoires $(X_i, Y_i)$ associées aux densités de probabilité de présence des deux antennes $A_1$ et $A_2$ sont indépendantes,

- le déplacement du terminal mobile est supposé rectiligne uniforme si le temps séparant deux évènements est inférieur à une première durée (par exemple une durée constante jouant le rôle d'un seuil minimum).

Dans une étape E2, on détermine une densité de distance $f_{D_{12}}$ pour deux évènements réseau ER1 et ER2 appartenant au premier jeu d'évènements réseau JER1 En utilisant la formule des probabilités totales et les hypothèses citées ci-dessus, on peut prouver que les variables aléatoires $(X_i, Y_i)$ suivent une loi de densité $f_i$. Bien entendu, d'autres méthodes de calculs peuvent être utilisées pour obtenir la densité de distance $f_{D_{12}}$.

On pose alors $D_{12} = \sqrt{(X_2 - X_1)^2 + (Y_2 - Y_1)^2}$ où $D_{12}$ représente la variable aléatoire donnant la distance parcourue par le terminal mobile entre les instants $t_1$ et $t_2$.

La variable aléatoire $D_{12}$ suit une loi de densité $f_{D_{12}}$, telle que : $\forall\, d \in \mathbb{R}_+$ :

$$f_{D_{12}}(d) = \int_{\mathbb{R}^3} f_1(x_1, y_1) \sum_{\pm} f_2\left(x_2, y_1 \pm \sqrt{d^2 - (x_2 - x_1)^2}\right) \frac{d\mathbb{1}_{\{d > |x_2 - x_1|\}}(x_1, x_2, d)}{\sqrt{d^2 - (x_2 - x_1)^2}} dx_1 dx_2 dy_1$$

(1)

En intégrant cette densité sur un intervalle de distance $[d_a, d_b]$ inclus dans $\mathbb{R}_+$ et en notant

$$E(d_a, d_b) = \left\{ (x, y, x', y') \in \mathbb{R}^4 \ / \ |y' - y| \leq \sqrt{d_b^2 - (x' - x)^2} \ et \ d_a \leq |x' - x| \leq d_b \right\}$$, on obtient, après interversion et à l'aide des changements de variables $y_2 = y_1 \pm \sqrt{d^2 - (x_2 - x_1)^2}$ dans les intégrales idoines, une forme beaucoup plus commode pour le calcul numérique :

$$\int_{d_a}^{d_b} f_{D_{12}}(d) = \int_{\mathbb{R}^4} f_1(x_1, y_1) f_2(x_2, y_2) \mathbb{1}_{E(d_a, d_b)}(x_1, x_2, y_1, y_2) \, dx_1 dx_2 dy_1 dy_2 \quad (2)$$

Une méthode pour calculer cette densité de distance $f_{D_{12}}$ peut-être, dans certains modes de réalisation, de créer un maillage spatial des deux cartes géographiques représentatives d'une zone de couverture d'une station de base associée à une antenne $A_i$, une première carte géographique correspondant à la station de base impliquée dans l'événement réseau ER1 et une deuxième carte géographique correspondant à la station de base impliquée dans l'événement réseau ER2. Chaque pixel $p_k$ de ce maillage peut être associé à une probabilité de prise en charge par l'antenne Ai conditionnée par la présence du terminal mobile en ce pixel $P(A_i|(X, Y) \in p_k)$. Une telle information est fournie par exemple par la carte de vraisemblance de prise en charge par une cellule associée à l'antenne $A_i$.

Dans une deuxième implémentation, la probabilité de transition $P(s_2 \mid s_1)$ est déterminée de la manière suivante :

$$P(s_2 \mid s_1) = \int_{v_{min}}^{v_{max}} f(v) dv$$

dans laquelle $s_1$ représente le premier segment de route candidat se situant dans la zone de couverture de la station de base $A_1$, $s_2$ représente le deuxième segment de route candidat se situant dans la zone de couverture de ladite deuxième station de base $A_2$, $f(v)$ représente une densité de vitesse moyenne de déplacement du terminal mobile, $v_{min} = d_{min}/\Delta t$ où $d_{min}$ représente la distance minimale sur route séparant le premier segment de route candidat $s_1$ et le deuxième segment de route candidat $s_2$ et $v_{max} = d_{max}/\Delta t$ où $d_{max}$ représente la somme de $d_{min}$ avec la longueur du premier segment de route candidat et la longueur du deuxième segment de route candidat et où $\Delta t$ = t2-t1.

En référence à la **[Fig. 5],** dans une étape H1, un premier évènement réseau ER1 et un deuxième événement réseau ER2 sont sélectionnés parmi une pluralité d'événements réseau $ER_i$ impliquant le terminal mobile. Une telle sélection consiste à prendre l'ensemble des couples d'évènements réseau tels que les deux évènements réseau ER1 et ER2 constitutifs d'un couple d'événements réseau sont présents dans la fenêtre temporelle considérée, qu'ils sont séparés d'une durée au moins égale à une certaine durée (dite minimale), qui peut être fixée de l'ordre de quelques secondes à quelques minutes, par exemple 5 ou 6 minutes, et sont tels que l'événement réseau ER2 est postérieur à l'événement réseau ER1.

Le premier et le deuxième événement réseau ER1, ER2 interviennent respectivement aux instants $t_1$ et $t_2$ et impliquent les antennes $A_1$ et $A_2$ portées par deux stations de base qui peuvent être différentes ou les mêmes

Pour $i \in \{1, 2\}$ on note $(X_i, Y_i)$ les variables aléatoires donnant respectivement la longitude et la latitude du terminal mobile à l'instant $t_i$.

Dans la suite du document, les hypothèses suivantes sont posées :

- les variables aléatoires $(X_i, Y_i)$ associées aux densités de probabilité de présence des deux antennes $A_1$ et $A_2$ sont indépendantes,

- le déplacement du terminal mobile est supposé rectiligne uniforme si le temps séparant deux évènements est inférieur à une première durée (par exemple une durée constante jouant le rôle d'un seuil minimum).

Dans une étape H2, on détermine une densité de distance $f_{D_{12}}$. En utilisant la formule des probabilités totales et les hypothèses citées ci-dessus, on peut prouver qu'un couple de variables $(X_i, Y_i)$ suit une loi de densité $f_i$. Bien entendu, d'autres méthodes de calculs peuvent être utilisées pour obtenir la densité de distance $f_{D_{12}}$.

On pose alors $D_{12} = \sqrt{(X_2 - X_1)^2 + (Y_2 - Y_1)^2}$ où $D_{12}$ représente la variable aléatoire donnant la distance parcourue par le terminal mobile entre les instants $t_1$ et $t_2$.

La variable aléatoire $D_{12}$ suit une loi de densité $f_{D_{12}}$, telle que : $\forall d \in \mathbb{R}_+$ :

$$f_{D_{12}}(d) = \int_{\mathbb{R}^3} f_1(x_1, y_1) \sum_{\pm} f_2(x_2, y_1 \pm \sqrt{d^2 - (x_2 - x_1)^2}) \frac{d \mathbb{1}_{\{d > |x_2 - x_1|\}}(x_1, x_2, d)}{\sqrt{d^2 - (x_2 - x_1)^2}} dx_1 dx_2 dy_1$$

Le terminal mobile étant supposé se déplacer selon un mouvement rectiligne uniforme, on calcule alors une densité de vitesse à l'aide du changement de variable suivant $v = \dfrac{d}{t_2 - t_1}$, ce qui donne :

$$f_{V_{12}}(v) = (t_2 - t_1) f_{D_{12}}(d) \qquad (1)$$

En intégrant cette densité sur un intervalle de distance $[d_a, d_b]$ inclus dans $\mathbb{R}_+$ et en notant

$$E(d_a, d_b) = \left\{ (x, y, x', y') \in \mathbb{R}^4 \, / \, |y' - y| \leq \sqrt{d_b^2 - (x' - x)^2} \ et \ d_a \leq |x' - x| \leq d_b \right\}$$, on obtient, après interversion et à l'aide des changements de variables $y_2 = y_1 \pm \sqrt{d^2 - (x_2 - x_1)^2}$ dans les intégrales idoines, une forme beaucoup plus commode pour le calcul numérique :

$$\int_{d_a}^{d_b} f_{D_{12}}(d) dd = \int_{\mathbb{R}^4} f_1(x_1, y_1) f_2(x_2, y_2) \mathbb{1}_{E(d_a, d_b)}(x_1, x_2, y_1, y_2) \, dx_1 dx_2 dy_1 dy_2 \qquad (2)$$

Une méthode pour calculer cette densité de distance $f_{D_{12}}$ peut-être de créer un maillage spatial des deux cartes géographique représentatives d'une zone de couverture d'une station de base associée à une antennes $A_i$. Chaque pixel $p_k$ de ce maillage peut être associé à une probabilité de prise en charge par l'antenne Ai conditionnée par la présence du terminal mobile en ce pixel $P(A_i|(X, Y) \in p_k)$. Une telle information est fournie par exemple par la carte de vraisemblance de prise en charge par une cellule associée à l'antenne $A_i$.

Ainsi, dans certains modes de réalisation, à l'issue d'une étape H2, on peut obtenir une densité de distance $f_{D_{12}}$ et donc, par le truchement du changement de variable $v = \dfrac{d}{t_2 - t_1}$, une densité de vitesse pour un couple d'évènements réseaux ER1, ER2.

Afin d'améliorer la précision de la valeur de la vitesse de déplacement d'un terminal mobile, les étapes H1 et H2 peuvent être répétées, dans certains modes de réalisation, pour une pluralité de couple d'évènements (à la condition par exemple que les instants $t_i$ associés à chacun des évènements soient compris dans la fenêtre temporelle d'historique (de 15 minutes par exemple) définie plus haut). Bien entendu, la durée de la fenêtre temporelle peut prendre n'importe quelle autre valeur en fonction des besoins, de la législation, etc.

Ainsi, une fois l'ensemble des couples d'évènements $ER_i$, $ER_j$ pris au sein de la fenêtre temporelle constitués, les étapes H1 et H2 sont mises en œuvre pour chacun de ces couples d'évènements $ER_i$, $ER_j$. A l'issue de ces différentes itérations des étapes H1 et H2, on peut obtenir autant de densités de vitesse de déplacement du terminal mobile que de couples d'évènements $ER_i$, $ER_j$.

Dans certains modes de réalisation, une étape H3 au cours de laquelle une combinaison entre elles des différentes densités de vitesse de déplacement du terminal mobile obtenues peut être mise en œuvre. Une telle combinaison peut par exemple résulter en une densité de probabilité de vitesse moyenne de déplacement du terminal mobile pour une durée inférieure ou égale à celle de la fenêtre temporelle considérée.

De tels modes de réalisation peuvent par exemple se baser sur au moins une hypothèse supplémentaire. Ainsi, il peut être supposé l'existence d'une loi de vitesse relative au déplacement du terminal mobile. Par exemple, il peut être supposé que cette loi de vitesse relative au déplacement du terminal mobile peut être obtenue à partir des différentes densités de vitesses de déplacement du terminal mobile correspondant aux couples d'évènements $ER_i$, $ER_j$.

Dans les modes de réalisation détaillés, afin d'obtenir la densité de probabilité de vitesse moyenne de déplacement du terminal mobile sur la durée de la fenêtre temporelle considérée, on peut par exemple considérer deux couples d'évènements, un premier couple d'événements $C_1$ constitué des évènements ER1 et ER2 et un deuxième couple d'événements $C_2$ constitué des évènements ER3 et ER4, ainsi que les densités de vitesse de déplacement du terminal mobile correspondantes obtenues à l'issue de la mise en œuvre des étapes E1 et E2, et notées respectivement $V_1$ et $V_2$.

On note V la variable aléatoire représentant la densité de vitesse moyenne de déplacement du terminal mobile, que l'on cherche à obtenir à partir des densités de vitesse de déplacement du terminal mobile $V_1$ et $V_2$.

Connaissant la propriété suivante :

$$\forall (v, v') \in \mathbb{R}_+^2, P(V \in [v, v']) > 0 \Leftrightarrow P(V_1 \in [v, v']) > 0) \ et \ P(V_2 \in [v, v']) > 0) \qquad (3)$$

qui dit que pour que l'événement, au sens des probabilités, « V $\in$ [v, v'] » se réalise avec une probabilité non nulle, il faut et il suffit que les évènements, au sens des probabilités, « V$_i$ $\in$ [v, v'] » se réalisent avec une probabilité non nulle.

En remarquant que les densités de vitesse de déplacement du terminal mobile $V_1$ et $V_2$ sont indépendantes l'une de l'autre par construction, la propriété (3) se réécrit alors :

$$\forall\, (v, v') \in \mathbb{R}_+^2, P(V \in [v, v']) > 0 \Leftrightarrow P(V_1 > 0 \ \cap V_2 > 0) > 0 \qquad (3')$$

En considérant la densité de vitesse moyenne du terminal mobile V vérifiant l'équation (3') comme le résultat de deux expériences aléatoires dont l'ordre n'importe pas, il est alors possible d'écrire, en notant I$_{v,v'}$ = [v, v'] pour tout v, v':

$$P\big(V \in I_{v,v'}\big) = \ P\big(V_1, V_2 \in I_{v,v'}^2\big)$$
$$+ P\big(V_1 \notin I_{v,v'} \cap V_2 \in I_{v,v'}\big)\mathbb{1}_{\left\{P\left(V_1 \in I_{v,v'}\right) > 0\right\}}(v, v')$$
$$+ P\big(V_1 \in I_{v,v'} \cap V_2 \notin I_{v,v'}\big)\mathbb{1}_{\left\{P\left(V_2 \in I_{v,v'}\right) > 0\right\}}(v, v')$$

que l'on peut réécrire, grâce à l'indépendance des deux densités de vitesse de déplacement du terminal mobile V$_1$ et V$_2$, sous la forme :

$$P\big(V \in I_{v,v'}\big) = \Big(1 - P\big(V_1 \notin I_{v,v'}\big)P\big(V_2 \notin I_{v,v'}\big)\Big)\mathbb{1}_{\left\{P\left(V_1 \in I_{v,v'} \cap V_2 \in I_{v,v'}\right) > 0\right\}}(v, v') \quad (4)$$

Une telle expression est facilement généralisable à n densités de vitesse de déplacement du terminal mobile indépendantes où n correspond au nombre de couple C$_i$ d'évènements constitués pour une fenêtre temporelle donnée.

L'équation (4) peut ensuite être normalisée afin de vérifier la propriété suivante : $P(V \in \mathbb{R}_+) = 1$, qui traduit le fait que la vitesse moyenne de déplacement du terminal mobile recherchée est positive ou nulle.

Dans certains modes de réalisation, à partir de la densité de vitesse moyenne de déplacement du terminal mobile telle que déterminée par exemple ci-dessus, il est possible d'obtenir, dans une étape H4, une valeur d'une vitesse moyenne de déplacement du terminal mobile en calculant l'espérance d'une loi de probabilité associée à la densité de vitesse moyenne de déplacement du terminal mobile V.

Ainsi, on peut déterminer un intervalle de confiance à 95%, par exemple, pour obtenir une valeur de la vitesse moyenne de déplacement du terminal mobile sur la fenêtre temporelle considérée. Bien entendu, d'autres méthodes de détermination d'une valeur de la vitesse moyenne de déplacement du terminal mobile sur la fenêtre temporelle considérée peuvent être mises en œuvre dans certains modes de réalisation, telle que le calcul de la médiane.

Dans certains modes de réalisation, pour mitiger le phénomène d'oscillation réseau, les instants $t_i$ et $t_j$ correspondant respectivement à un événement réseau ER$_i$ et à un événement ER$_j$ constituant un couple C$_i$ d'évènements réseau, peuvent être choisis pour être séparés par une durée minimale. Ainsi, la durée écoulée entre la survenue de l'événement ER$_i$ et de l'événement ER$_j$ est supérieure ou égale à un première durée. Une telle durée, jouant le rôle d'un seuil, peut par exemple lorsque la fenêtre temporelle considérée dure 15 minutes, être fixée de l'ordre de quelques secondes à quelques minutes (par exemple de 3 à 9 minutes), comme une durée de 5 ou 6 minutes. Bien entendu d'autres valeurs de cette première durée peuvent être envisagées.

Dans une troisième implémentation, la probabilité de transition $P(s_2 \mid s_1)$ est déterminée de la manière suivante :

$$P(s_2 \mid s_1) = \int_{\theta_{min}}^{\theta_{max}} f(\theta)d\theta$$

dans laquelle $s_1$ représente le premier segment de route candidat se situant dans la zone de couverture de ladite première station de base, $s_2$ représente le deuxième segment de route candidat se situant dans la zone de couverture de ladite deuxième station de base, $f(\theta)$ représente une densité de direction moyenne de déplacement du terminal mobile entre les zones de couverture de la première station de base $A_1$ et de la deuxième station de base $A_2$, $\theta_{min}$ représente la borne inférieure d'une intersection d'un premier secteur angulaire définissant des directions de déplacement possibles pour le terminal mobile avec un deuxième secteur angulaire définissant un angle maximum entre une première extrémité du premier segment de route candidat et une deuxième extrémité du deuxième segment de route candidat et $\theta_{max}$ représente la borne supérieure de l'intersection du premier secteur angulaire et du deuxième secteur angulaire. Plus particulièrement, le premier intervalle angulaire définit un intervalle de confiance à 95% pour la direction estimée du terminal mobile. Le deuxième secteur angulaire peut également être défini comme étant le secteur angulaire entre la borne supérieure et la borne inférieure des quatre angles formés par les lignes reliant les extrémités du premier segment de route candidat $s_1$ et les extrémités du deuxième segment de route candidat $s_2$.

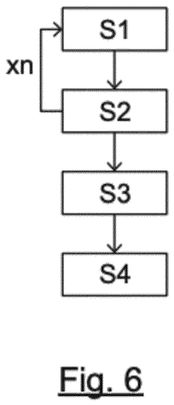

En référence à la **[Fig. 6],** la variable représentative d'un déplacement du terminal mobile est la direction de déplacement.

L'obtention d'une valeur d'une direction de déplacement d'un terminal mobile reposant sur l'utilisation de données de signalisation relatives à des terminaux mobiles, et donc à leurs utilisateurs, il peut être nécessaire se conformer à des contraintes d'anonymisation, ou de pseudoanonymisation, à bref-délai. Ainsi, les calculs à effectuer utilisent des données de signalisation dont l'historique n'excède pas une certaine durée. Une telle durée est, par exemple, de 15 minutes.

Afin de déterminer la valeur d'une direction de déplacement d'un terminal mobile, on sélectionne dans une étape S1 un premier évènement réseau ER1 et d'un deuxième événement réseau ER2 parmi une pluralité d'événements réseau $ER_i$ impliquant le terminal mobile.

Le premier et le deuxième événement réseau ER1, ER2 interviennent respectivement aux instants $t_1$ et $t_2$ et impliquent les antennes $A_1$ et $A_2$ portées par deux stations de base différentes.

Pour $i \in \{1, 2\}$ on note $(X_i, Y_i)$ les variables aléatoires donnant respectivement la longitude et la latitude du terminal mobile à l'instant $t_i$.

Dans une étape S2, on détermine une densité de direction $f_{\theta_{12}}$. En utilisant la formule des probabilités totales et les hypothèses citées ci-dessus, on prouve de manière directe que le couple de variables $(X_i, Y_i)$ suit une loi de densité $f_i$.

On pose alors $\theta_{12} = \arctan\left(\frac{Y_2 - Y_1}{X_2 - X_1}\right)$ où $\theta_{12}$ représente la variable aléatoire donnant la direction de déplacement du terminal mobile entre les instants $t_1$ et $t_2$.

La variable aléatoire $\theta_{12}$ suit une loi de densité $f_{\theta_{12}}$, telle que : $\forall \, \theta \in [0, 2\pi[$:

$$f_{\theta_{12}}(\theta) = \int_{\mathbb{R}^3} f_1(x_1, y_1) f_2(x_2, y_1 + (x_2 - x_1)\tan(\theta))(x_2 - x_1)(1 + tan^2(\theta))\mathbb{1}_{\{x_2 \neq x_1\}}\mathbb{1}_{\left\{\theta \neq \left(k + \frac{1}{2}\right)\pi, \ k \in \mathbb{Z}\right\}} dx_1 dx_2 dy_1$$

Le terminal mobile étant supposé se déplacer selon un mouvement rectiligne uniforme, on calcule alors une densité de direction comme suit :

En intégrant cette densité sur un intervalle d'angle $[\theta_a, \theta_b]$ inclus dans $[0, 2\pi[\backslash \left\{\left(k + \frac{1}{2}\right)\pi, \ k \in \mathbb{Z}\right\}$, et en notant

$E(\theta_a, \theta_b) = \left\{(x, y, x', y') \in \mathbb{R}^4 - y' \epsilon \left[y + (x' - x)tan(\theta_a), (x' - x)tan(\theta_b)\right]\right\}$, on obtient, après interversion et à l'aide des changements de variables $y_2 = y_1 + (x_2 - x_1)tan(\theta)$ dans les intégrales idoines, une forme beaucoup plus commode pour le calcul numérique :

$$\int_{\theta_a}^{\theta_b} f_{\theta_{12}}(\theta) \, d\theta = \int_{\mathbb{R}^4} f_1(x_1, y_1) f_2(x_2, y_2)\mathbb{1}_{E(\theta_a, \theta_b)}(x_1, x_2, y_1, y_2) \, dx_1 dx_2 dy_1 dy_2 \qquad (2)$$

Ainsi, à l'issue de l'étape S2, on obtient une densité de direction $f_{\theta_{12}}$ pour un couple d'évènements réseaux ER1, ER2.

Afin d'améliorer la précision de la valeur de la direction de déplacement d'un terminal mobile, les étapes S1 et S2 être également répétées pour une pluralité de couple d'évènements à la condition que les instants $t_i$ associés à chacun des évènements soient compris dans la fenêtre temporelle de 15 minutes définie plus haut.

Ainsi, une fois l'ensemble des couples d'évènements $ER_i$, $ER_j$ pris au sein de la fenêtre temporelle constitués, les étapes S1 et S2 peuvent être mises en œuvre pour chacun de ces couples d'évènements $ER_i$, $ER_j$. A l'issue de ces différentes itérations des étapes S1 et S2, on obtient par exemple autant de densités de direction de déplacement du terminal mobile que de couples d'évènements $ER_i$, $ER_j$.

Dans une étape S3, les différentes densités de direction de déplacement du terminal mobile obtenues peuvent être combinées entre elles. Le résultat d'une telle combinaison donne une densité de probabilité de direction moyenne de déplacement du terminal mobile sur la durée de la fenêtre temporelle considérée.

Pour cela il convient d'ajouter une hypothèse supplémentaire. Ainsi, il est supposé l'existence d'une loi de direction relative au déplacement du terminal mobile. Il est supposé que cette loi de direction relative au déplacement du terminal mobile peut être obtenue à partir des différentes densités de directions de déplacement du terminal mobile des différents correspondant aux couples d'évènements $ER_i$, $ER_j$.

Afin d'obtenir la densité de probabilité de direction moyenne de déplacement du terminal mobile sur la durée de la fenêtre temporelle considérée, on considère deux couples d'évènements, un premier couple d'événements $C_1$ constitué des évènements ER1 et ER2 et un deuxième couple d'événements $C_2$ constitué des évènements ER3 et ER4, ainsi que les densités de direction de déplacement du terminal mobile correspondantes obtenues à l'issue de la mise en œuvre des étapes S1 et S2, et notées respectivement $\theta_1$ et $\theta_2$.

On note $\theta$ la variable aléatoire représentant la densité de direction moyenne de déplacement du terminal mobile, que l'on cherche à obtenir à partir des densités de direction de déplacement du terminal mobile $\theta_1$ et $\theta_2$.

Connaissant la propriété suivante :

$$\forall\,(\theta,\theta') \in [0, 2\pi[^2, \mathrm{P}(\theta \in [\theta, \theta']) > 0 \Leftrightarrow \mathrm{P}(\theta_1 \in [\theta, \theta']) > 0) \text{ et } \mathrm{P}(\theta_2 \in [\theta, \theta']) > 0) \quad (3)$$

qui dit que pour que l'événement, au sens des probabilités, « $\theta \in [\theta, \theta']$ » se réalise avec une probabilité non nulle, il faut et il suffit que les évènements, au sens des probabilités, « $\theta_i \in [\theta, \theta']$ » se réalisent avec une probabilité non nulle.

En remarquant que les densités de direction de déplacement du terminal mobile $\theta_1$ et $\theta_2$ sont indépendantes l'une de l'autre par construction, la propriété (3) se réécrit alors :

$$\forall\,(\theta,\theta') \in [0, 2\pi[^2, \mathrm{P}(\theta \in [\theta, \theta']) > 0 \Leftrightarrow \mathrm{P}(\theta_1 > 0 \,\cap\, \theta_2 > 0) > 0 \quad (3')$$

En considérant la densité de direction moyenne du terminal mobile $\theta$ vérifiant l'équation (3') comme le résultat de deux expériences aléatoires dont l'ordre n'importe pas, il est alors possible d'écrire, en notant $\mathrm{I}_{\theta,\theta'} = [\theta, \theta']$ pour tout $\theta,\theta'$ :

$$
\begin{aligned}
P\big(\theta \in \mathrm{I}_{\theta,\theta'}\big) =\ & \mathrm{P}\big(\theta_1, \theta_2 \in \mathrm{I}_{\theta,\theta'}^2\big) \\
& + \mathrm{P}\big(\theta_1 \notin \mathrm{I}_{\theta,\theta'} \cap \theta_2 \in \mathrm{I}_{\theta,\theta'}\big)\mathbb{1}_{\left\{\mathrm{P}\big(\theta_1 \in \mathrm{I}_{\theta,\theta'}\big) > 0\right\}}(\theta, \theta') \\
& + \mathrm{P}\big(\theta_1 \in \mathrm{I}_{\theta,\theta'} \cap \theta_2 \notin \mathrm{I}_{\theta,\theta'}\big)\mathbb{1}_{\left\{\mathrm{P}\big(\theta_2 \in \mathrm{I}_{\theta,\theta'}\big) > 0\right\}}(\theta, \theta')
\end{aligned}
$$

que l'on peut réécrire, grâce à l'indépendance des deux densités de direction de déplacement du terminal mobile $\theta_1$ et $\theta_2$, sous la forme :

$$\mathrm{P}\big(\theta \in \mathrm{I}_{\theta,\theta'}\big) = \Big(1 - \mathrm{P}\big(\theta_1 \notin \mathrm{I}_{\theta,\theta'}\big)\mathrm{P}\big(\theta_2 \notin \mathrm{I}_{\theta,\theta'}\big)\Big)\mathbb{1}_{\left\{\mathrm{P}\big(\theta_1 \in \mathrm{I}_{\theta,\theta'} \cap \theta_2 \in \mathrm{I}_{\theta,\theta'}\big) > 0\right\}}(\theta, \theta') \quad (4)$$

Une telle expression est facilement généralisable à n densités de direction de déplacement du terminal mobile indépendantes où n correspond au nombre de couple $C_i$ d'évènements constitués pour une fenêtre temporelle donnée.

Dans certains modes de réalisation, l'équation (4) peut ensuite être normalisée afin de vérifier la propriété suivante :

$\mathrm{P}(\theta \in [0, 2\pi[) = 1$, qui traduit le fait que la direction moyenne de déplacement du terminal mobile recherchée est dans l'intervalle $[0, 2\pi[$.

Dans certains modes de réalisation, à partir de la densité de direction moyenne de déplacement du terminal mobile ainsi déterminée, il est possible d'obtenir, dans une étape S4, une valeur d'une direction moyenne de déplacement du terminal mobile en calculant l'espérance d'une loi de probabilité associée à la densité de direction moyenne de déplacement du terminal mobile $\theta$.

Dans la mesure où les densités de direction du terminal mobile sont des densités circulaires, il convient d'adapter le calcul de l'espérance et de l'écart-type.

Pour cela, il convient de poser : $m_1 = \int_\Gamma P(\theta)\, e^{i\theta}\, d\theta$, où $\Gamma$ est n'importe quel intervalle d'étendue $2\pi$.

La valeur de direction moyenne de déplacement du terminal mobile s'exprime alors comme $\overline{\theta} = \arg(m_1)$.

Pour le calcul de l'écart-type, plusieurs méthodes sont possibles et utilisent le plus souvent le module de $m_1$ ainsi qu'une analogie avec une distribution normale circulaire. Dans un exemple, l'estimateur de l'écart-type suivant est donné par :

$$\sigma_\theta = \arcsin(\varepsilon)\left[1 + \left(\frac{2}{\sqrt{3}} - 1\right)\varepsilon^3\right],$$

où $\epsilon = \sqrt{1 - (Re(m_1)^2 + Im(m_1)^2)}$ où Re(m1) et Im(m1) désignent respectivement la partie réelle et la partie imaginaire de m1.

Cet écart-type peut ensuite être utilisé pour la détermination d'un intervalle de confiance à 95%.

Dans cette troisième implémentation, un premier secteur angulaire est défini comme s'étendant entre une première direction $\theta_{model\,max}$ associée à l'un des segments candidats associés à l'événement E2 et une direction $\theta_{model\,min}$ associée à un autre des segments candidats associés à l'événement E2, les directions des autres segments de route candidats étant comprises entre $\theta_{model\,max}$ et $\theta_{model\,min}$.

Un deuxième secteur angulaire est défini comme s'étendant entre une première direction $\theta_{trans\,max}$ associée à un segment reliant une première extrémité d'un segment candidat associé à l'événement E1 et une première extrémité d'un segment candidat associé à l'événement E2, et une direction $\theta_{trrans\,min}$ associée à un autre segment reliant une deuxième extrémité d'un segment candidat associé à l'événement E1 et une deuxième extrémité d'un segment candidat associé à l'événement E2. Les directions des autres segments reliant les extrémités des deux segments candidats associés respectivement à l'événement E1 et à l'événement E2 sont comprises entre $\theta_{trans\,max}$ et $\theta_{trans\,min}$.

Bien entendu, la probabilité de transition $P(s_2 \mid s_1)$ peut être déterminée en fonction d'au moins deux densités représentatives d'un déplacement du terminal mobile parmi la densité de distribution de distances entre les zones de couverture de la première station de base et de la deuxième station de base $f(u)$, la densité de vitesse moyenne de déplacement du terminal mobile $f(v)$ et la densité de direction moyenne de déplacement du terminal mobile entre les zones de couverture de la première station de base et de la deuxième station de base $f(\theta)$.

Afin de prendre en compte le comportement de l'utilisateur du terminal mobile, la probabilité de transition peut être pondérée, dans certains modes de réalisation, au moyen d'un coefficient de pénalité représentatif du nombre de nœuds d'un réseau de transport compris dans un itinéraire candidat. Un nœud d'un réseau de transport est par exemple un carrefour, une station de métro, une gare, etc. il est parti du principe qu'un utilisateur cherche à limiter (par exemple minimiser) les changements de direction ou de mode de transport et donc le nombre de nœuds de l'itinéraire candidat.

A titre d'exemple, la loi mathématique liant la valeur du coefficient de pénalité avec le nombre de nœuds est donnée par la formule suivante :

$$y = \lambda\, e^{-\lambda x}$$

où y correspond à la valeur du coefficient de pénalité, x au nombre de nœuds - 1 et $\lambda$ une constante. Dans la suite du présent document il est considéré que $\lambda$ vaut 1. Bien entendu, $\lambda$ peut prendre d'autres valeurs en fonction du cas d'espèce.

A l'issue de l'étape G4, une probabilité de transition a été calculée pour l'ensemble des segments de route candidats pour un couple d'évènements réseau donné.

Les étapes G3 et G4 sont par exemple mises en œuvre pour l'ensemble des évènements réseau considérés pour la détermination de l'itinéraire emprunté par le terminal mobile.

Ainsi, une fois les étapes G3 et G4 mises en œuvre pour l'ensemble des évènements réseau considérés pour la détermination de l'itinéraire emprunté par le terminal mobile, on dispose d'une pluralité d'itinéraires candidats pour le terminal mobile.

Dans une étape G5, l'itinéraire emprunté par le terminal mobile est sélectionné parmi l'ensemble des itinéraires candidats en tenant compte des probabilités de connexion (ou d'émission) et des probabilités de transition de la pluralité d'évènements réseau considérée. Par exemple, l'itinéraire emprunté sélectionné peut être celui pour lequel un produit de l'ensemble des probabilités de connexion (ou d'émission) avec l'ensemble des probabilités de transition déterminées pour la pluralité d'évènements réseau considérée est le plus élevé. Pour cela, on peut par exemple appliquer un algorithme de Viterbi qui permet de choisir l'itinéraire le plus probable parmi un ensemble d'itinéraires candidats.

Dans certains modes de réalisation, on peut utiliser un algorithme de détection de mobilité d'un terminal mobile afin d'obtenir uniquement des données relatives à des terminaux mobiles effectivement en mouvement. En effet, déterminer l'itinéraire d'un terminal mobile qui ne serait pas effectivement en mouvement peut, dans certains modes des réalisation, présenter un faible intérêt (voire aucun intérêt) et ne pas tenir compte des terminaux immobiles peut permettre de limiter la charge en termes de ressource mémoire et de traitement nécessaire à l'exécution du procédé.

Dans un tel mode réalisation, pour estimer la mobilité effective d'un terminal mobile, on peut par exemple utiliser la distance parcourue, ou la direction d'un terminal mobile.

Pour cela,-on peut par exemple appliquer les mêmes opérations qu'exposé précédemment en référence à la figure 4 à un deuxième couple d'évènements réseau ER3 et ER4 appartenant au deuxième jeu d'évènements réseau JER2 afin d'obtenir une densité de distance $f_{D34}$ parcourue pour le couple d'évènements réseau ER3, ER4. Les évènements réseau ER3, ER4 interviennent au sein d'une même cellule.

Ainsi, dans certains modes de réalisation, à l'issue d'une étape E2', on peut obtenir une première densité de distance $f_{D12}$ parcourue pour le couple d'évènements réseaux ER1, ER2 et une deuxième une densité de distance $f_{D34}$ parcourue pour le couple d'évènements réseaux ER3, ER4.

Cette deuxième densité de distance $f_{D34}$ parcourue représente une incertitude de déplacement du terminal mobile inhérente au réseau de communication radio qui va permettre de déterminer si la première densité de distance $f_{D12}$ parcourue correspond à un déplacement (effectif) du terminal mobile ou correspond à un terminal mobile immobile du point de vue du réseau de communications radio, c'est-à-dire un terminal mobile qui est resté dans la zone de couverture d'une même station de base.

Afin d'améliorer la précision de la valeur de la distance parcourue par le terminal mobile, et/ou la précision de la valeur de l'incertitude de déplacement du terminal mobile inhérente au réseau de communication radio, les étapes E1' et E2' (qui correspondent aux étapes E1 et E2 décrites en référence à la figure 4) peuvent être répétées, dans certains modes de réalisation, pour une pluralité de couple d'évènements réseau appartenant au premier jeu d'évènements réseau JER1 et/ou pour une pluralité de couple d'évènements réseau appartenant au deuxième jeu d'événements réseau JER2 (à la condition par exemple que les instants $t_i$ associés à chacun des évènements soient compris dans la fenêtre temporelle (de 15 minutes par exemple) définie plus haut). Bien entendu, la durée de la fenêtre temporelle peut prendre n'importe quelle autre valeur en fonction des modes de réalisation (par exemple en fonction des besoins, de la législation, etc.)

Ainsi, une fois l'ensemble des couples d'évènements $ER_i$, $ER_j$ pris au sein de la fenêtre temporelle constitués pour les deux jeux d'événements réseau JER1 et JER2, les étapes E1' et E2' peuvent être mises en œuvre pour des couples d'évènements $ER_i$, $ER_j$ de l'un de ces deux jeux d'évènements réseau JER1 et JER2 (pour chacun de ces couples de ces deux jeux par exemple). A l'issue de ces différentes itérations des étapes E1' et E2,' on peut obtenir, pour le premier jeu d'événements réseau JER1, autant de densités de distances parcourues du terminal mobile que de couples d'évènements $ER_i$, $ER_j$ provenant de ce jeu d'évènement réseau JER1 et pour le deuxième jeu d'évènements réseau JER2, autant de de valeurs d'une incertitude de déplacement du terminal mobile inhérente au réseau de communication radio que de couples d'évènements $ER_i$, $ER_j$ provenant de ce jeu d'évènement réseau JER2.

Dans certains modes de réalisation, une étape E3' (qui correspond à l'étape E3 et E2 décrite en référence à la figure 4) au cours de laquelle une combinaison entre elles des différentes densités de distance parcourue du terminal mobile obtenues pour les couples d'évènements réseau appartenant au premier jeu d'évènements réseau JER1 peut être mise en œuvre. Une telle combinaison peut par exemple résulter en une densité de distance parcourue moyenne du terminal mobile pour une durée inférieure ou égale à celle de la fenêtre temporelle considérée.

De tels modes de réalisation, peuvent par exemple se baser sur une hypothèse supplémentaire. Ainsi, il peut être supposé l'existence d'une loi de distance parcourue relative au déplacement du terminal mobile. Par exemple, Il peut être supposé que cette loi de distance parcourue relative au déplacement du terminal mobile peut être obtenue à partir des différentes densités de distance parcourues par le terminal mobile correspondant aux couples d'évènements $ER_i$, $ER_j$.

Dans les modes de réalisation détaillés, afin d'obtenir la densité de distance parcourue moyenne de déplacement du terminal mobile sur la durée de la fenêtre temporelle considérée, on peut par exemple considérer deux couples d'évènements appartenant au premier jeu d'événements réseau JER1, un premier couple d'événements $C_1$ constitué des évènements ER1 et ER2 et un deuxième couple d'événements $C_2$ constitué des évènements ER5 et ER6, ainsi que les densités de distance parcourue de déplacement du terminal mobile correspondantes obtenues à l'issue de la mise en œuvre des étapes E1' et E2', et notées respectivement $D_1$ et $D_2$.

On note D la variable aléatoire représentant la densité de distance parcourue moyenne de déplacement du terminal mobile, que l'on cherche à obtenir à partir des densités de distance parcourue de déplacement du terminal mobile $D_1$ et $D_2$.

Connaissant la propriété suivante :

$$\forall (d, d') \in \mathbb{R}_+^2, P(D \in [d, d']) > 0 \Leftrightarrow P(D_1 \in [d, d']) > 0) \; et \; P(D_2 \in [d, d']) > 0) \quad (3)$$

qui dit que pour que l'événement, au sens des probabilités, « $D \in [d, d']$ » se réalise avec une probabilité non nulle, il faut et il suffit que les évènements, au sens des probabilités, « $D_i \in [d, d']$ » se réalisent avec une probabilité non nulle.

En remarquant que les densités de distance parcourue par le terminal mobile $VD_1$ et $D_2$ sont indépendantes l'une de l'autre par construction, la propriété (3) se réécrit alors :

$$\forall (d, d') \in \mathbb{R}_+^2, P(D \in [d, d']) > 0 \Leftrightarrow P(D_1 > 0 \cap D_2 > 0) > 0 \quad (3')$$

En considérant la densité de distance parcourue moyenne du terminal mobile D vérifiant l'équation (3') comme le résultat de deux expériences aléatoires dont l'ordre n'importe pas, il est alors possible d'écrire, en notant $I_{d,d'}$, = [d, d'] pour tout d, *d'*:

$$\left(D \in I_{d,d'}\right) = P\left(D_1, D_2 \in I_{d,d'}^2\right)$$
$$+ P\left(D_1 \notin I_{d,d'} \cap D_2 \in I_{d,d'}\right)\mathbb{1}_{\left\{P\left(D_1 \in I_{d,d'}\right)>0\right\}}(d, d')$$
$$+ P\left(D_1 \in I_{d,d'} \cap D_2 \notin I_{d,d'}\right)\mathbb{1}_{\left\{P\left(D_2 \in I_{d,d'}\right)>0\right\}}(d, d')$$

que l'on peut réécrire, grâce à l'indépendance des deux densités de distance parcourue par le terminal mobile $D_1$ et $D_2$, sous la forme :

$$P\left(D \in I_{d,d'}\right) = \left(1 - P\left(D_1 \notin I_{d,d'}\right)P\left(D_2 \notin I_{d,d'}\right)\right)\mathbb{1}_{\left\{P\left(D_1 \in I_{d,d'} \cap D_2 \in I_{d,d'}\right)>0\right\}}(d, d') \quad (4)$$

Une telle expression est facilement généralisable à n densités de distance parcourue par le terminal mobile indépendantes où n correspond au nombre de couple $C_i$ d'évènements constitués pour une fenêtre temporelle donnée.

L'équation (4) peut ensuite être normalisée afin de vérifier la propriété suivante : $P(V \in \mathbb{R}_+) = 1$, qui traduit le fait que la distance moyenne parcourue par le terminal mobile recherchée est positive ou nulle.

Le même raisonnement peut être appliqué afin d'obtenir une combinaison entre elles des différentes valeurs d'une incertitude de déplacement du terminal mobile inhérente au réseau de communication radio obtenues pour les couples d'évènements réseau appartenant au deuxième jeu d'évènements réseau JER2.

Comme précédemment, on considère deux couples d'évènements appartenant au deuxième jeu d'événements réseau JER2, un premier couple d'événements $C_3$ constitué des évènements ER3 et ER4 et un deuxième couple d'événements $C_4$ constitué des évènements ER7 et ER8, ainsi que les densités de distance parcourue de déplacement du terminal mobile correspondantes obtenues à l'issue de la mise en œuvre des étapes E1' et E2', et notées respectivement $D_3$ et $D_4$. On obtient alors une variable aléatoire D' représentant une incertitude de déplacement du terminal mobile inhérente au réseau de communication radio moyenne.

Dans certains modes de réalisation, on peut par exemple comparer la première densité de distance parcourue par le terminal mobile, obtenue à partir de couples d'évènements appartenant au premier jeu d'évènements réseau JER1, à cette information de bruit, obtenue à partir de couples d'évènements appartenant au deuxième jeu d'évènements réseau JER2, afin de déterminer si le terminal mobile s'est effectivement déplacé, i.e. a changé de station de base de rattachement consécutivement à un déplacement (effectif) ou si le terminal mobile n'a pas quitté la zone de couverture d'une station de base et est donc immobile du point de vue du réseau de communications radio.

Dans certains modes de réalisation, pour comparer la première densité de distance parcourue et la deuxième densité de distance parcourue, on détermine par exemple une distance de Hellinger au cours d'une étape E4. Une telle distance de Hellinger peut être construite à partir d'un coefficient de Bhattacharyya.

Comme expliqué plus en détails ci-après, la valeur de la distance de Hellinger ainsi construite peut aider à déterminer si le terminal mobile s'est effectivement déplacé. Lorsque la distance de Helliger a une valeur élevée, c'est-à-dire lorsqu'elle est proche de 1, on considère que le terminal mobile s'est effectivement déplacé. Lorsque la distance de Helliger a une valeur faible, c'est-à-dire lorsqu'elle est proche de 0, on considère que le terminal mobile est en situation d'immobilité. Ainsi, pour des densités de probabilité continues p et q, le coefficient de Bhattacharyya est défini comme :

$$BC(p, q) = \int \sqrt{p(x)q(x)}\, dx$$

Un tel coefficient de Bhattacharyya est compris entre 0, cas où les densités de probabilité continues p et q ne se recouvrent pas, et 1, cas où les densités de probabilité continues p et q sont égales.

La distance de Hellinger est alors définie comme : $d_H(p, q) = \sqrt{1 - BC(p, q)}$.

Cette distance est aussi comprise entre 0, cas où les densités de probabilité continues p et q ne se recouvrent pas, et 1, cas où les densités de probabilité continues p et q sont égales.

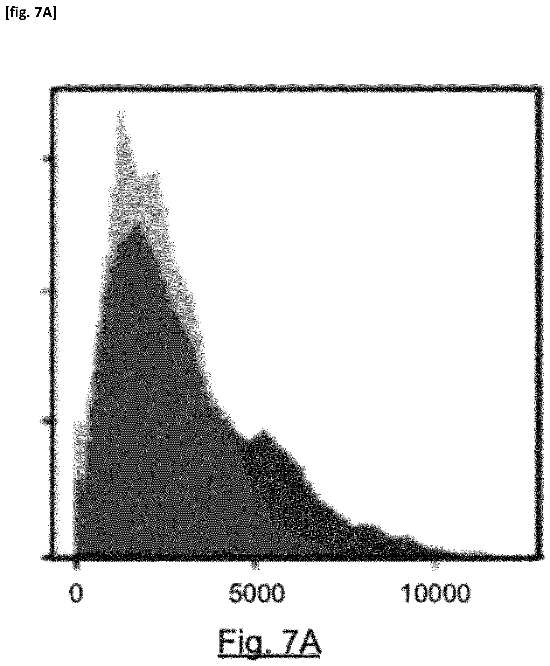

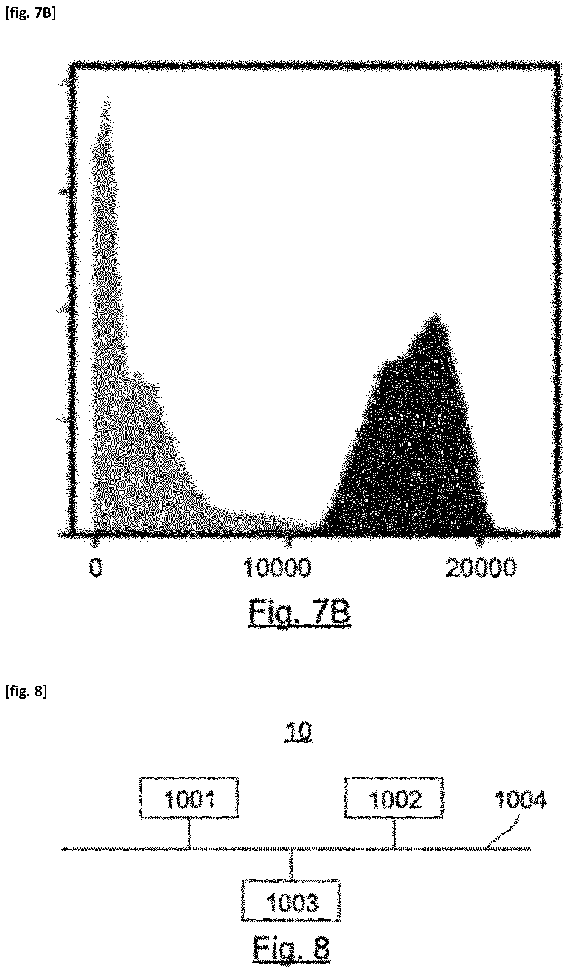

Les **[FIG. 7A]** et **[FIG. 7B]** représentent respectivement une situation dans laquelle le terminal mobile est immobile du point de vue du réseau de communications radio et une situation dans laquelle le terminal mobile est mobile du point de vue du réseau de communications radio.

En effet, sur la figure **7A,** on voit que les deux densités de distance parcourue se recouvrent presque intégralement, cela correspondant à une distance de Hellinger proche de 0. Sur la figure 4B, au contraire, on voit que les deux densités de distance parcourue ne se recouvrent pas, cela correspondant à une distance de Hellinger proche de 1.

Dans certains modes de réalisation, pour mitiger le phénomène d'oscillation réseau, les instants $t_i$ et $t_j$

correspondant respectivement à un événement réseau $ER_i$ et à un événement $ER_j$ constituant un couple $C_i$ d'évènements réseau peuvent être choisis pour être séparés par une durée minimale. Ainsi, la durée écoulée entre la survenue de l'événement $ER_i$ et de l'événement $ER_j$ est supérieure ou égale à une première durée. Une telle durée, jouant le rôle d'un seuil, peut par exemple lorsque la fenêtre temporelle considérée dure 15 minutes, être fixée de l'ordre de quelques minutes (par exemple de 3 à 9 minutes), comme une durée de 6 minutes. Bien entendu d'autres valeurs de cette première durée peuvent être envisagées.

La **[fig .8]** représente un dispositif 10 apte à mettre en œuvre certaines étapes de la solution précédemment décrite.

Un dispositif 10 peut comprendre au moins un processeur matériel 1001 une unité de stockage 1002, une interface 1003, qui sont connectés entre eux au travers d'un bus 1004. Bien entendu, les éléments constitutifs du dispositif 10 peuvent être connectés au moyen d'une connexion autre qu'un bus.

Le processeur 1001 commande les opérations du dispositif 10. L'unité de stockage 1002 stocke au moins un programme pour la mise en œuvre du procédé objet de l'invention à exécuter par le processeur 1001, et diverses données, telles que des paramètres utilisés pour des calculs effectués par le processeur 1001, des données intermédiaires de calculs effectués par le processeur 1001, etc. Le processeur 1001 peut être formé par tout matériel ou logiciel connu et approprié, ou par une combinaison de matériel et de logiciel. Par exemple, le processeur 1001 peut être formé par un matériel dédié tel qu'un circuit de traitement, ou par une unité de traitement programmable telle qu'une unité centrale de traitement (Central Processing Unit) qui exécute un programme stocké dans une mémoire de celui-ci.

L'unité de stockage 1002 peut être formée par n'importe quel moyen approprié capable de stocker le programme ou les programmes et des données d'une manière lisible par un ordinateur. Des exemples d'unité de stockage 1002 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

L'interface 1003 fournit une interface entre le dispositif 10 et un autre équipement du réseau de communication radio.

## Revendications

**1.** Procédé de détermination d'un itinéraire d'un terminal mobile à partir de données relatives à une pluralité d'évènements réseau impliquant ledit terminal mobile, ledit itinéraire étant constitué d'au moins un segment de route d'un réseau de transport, ledit procédé comprenant :

- une détermination d'au moins un itinéraire candidat au cours de laquelle il est déterminé, pour au moins un premier événement réseau parmi la pluralité d'évènements réseau :

une probabilité de connexion dudit terminal mobile à une première station de base impliquée dans le premier événement réseau sachant que ledit terminal mobile se trouve, à un instant t1 auquel le premier événement réseau est survenu, sur un premier segment de route candidat se situant dans une zone de couverture de ladite première station de base, et
une probabilité de transition, à un instant t2 auquel un deuxième événement réseau dans lequel une deuxième station de base est impliquée est survenu, dudit terminal vers au moins un deuxième segment de route candidat se situant dans une zone de couverture de ladite deuxième station de base sachant que le terminal mobile se trouve sur le premier segment de route candidat à l'instant t1 ;

- sélection dudit itinéraire dudit terminal mobile parmi l'ensemble des itinéraires candidats en tenant compte des probabilités de connexion et des probabilités de transition déterminées pour la pluralité d'évènements réseau.

**2.** Dispositif de détermination d'un itinéraire d'un terminal mobile à partir de données relatives à une pluralité d'évènements réseau impliquant ledit terminal mobile, ledit itinéraire étant constitué d'au moins un segment de route d'un réseau de transport, ledit dispositif comprenant un processeur configuré pour :

- déterminer au moins un itinéraire candidat en déterminant, pour au moins un premier événement réseau parmi la pluralité d'évènements réseau :

une probabilité de connexion dudit terminal mobile à une première station de base impliquée dans le premier événement réseau sachant que ledit terminal mobile se trouve, à un instant t1 auquel le premier événement réseau est survenu, sur un premier segment de route candidat se situant dans une zone de couverture de ladite première station de base, dite probabilité d'émission, et

une probabilité de transition, à un instant t2 auquel un deuxième événement réseau dans lequel une deuxième station de base est impliquée est survenu, dudit terminal vers au moins un deuxième segment de route candidat se situant dans une zone de couverture de ladite deuxième station de base sachant que le terminal mobile se trouve sur le premier segment de route candidat à l'instant t1 ;

- sélectionner ledit itinéraire emprunté parmi l'ensemble des itinéraires candidats en tenant compte des probabilités de connexion et des probabilités de transition déterminées pour la pluralité d'évènements réseau.

3. Procédé de détermination d'un itinéraire selon la revendication 1, ou dispositif de détermination d'un itinéraire selon la revendication 2, où ledit itinéraire sélectionné est celui pour lequel un produit de l'ensemble des probabilités de connexion avec l'ensemble des probabilités de transition déterminées pour la pluralité d'évènements réseau est le plus élevé.

4. Procédé de détermination d'un itinéraire selon la revendication 1 ou la revendication 3, ou dispositif de détermination d'un itinéraire selon la revendication 2 ou la revendication 3, où la probabilité de connexion $P(A \mid s_1)$ pour un événement réseau donné est déterminée selon la formule suivante :

$$P(A \mid s_1) = \frac{\sum_{j=1}^{n} P(A \mid p_j)}{n}$$

dans laquelle $A$ représente la première station de base impliquée dans le premier événement, $s_1$ représente le premier segment de route candidat se situant dans la zone de couverture de ladite première station de base, $p_j$ représente un pixel d'une carte de vraisemblance représentant une probabilité de connexion dudit terminal mobile à la première station de base lorsque le terminal est situé sur un pixel de ladite carte de vraisemblance, et n représente le nombre de pixels de ladite carte de vraisemblance de poids non nul traversés par le premier segment de route candidat $s_1$.

5. Procédé de détermination d'un itinéraire selon la revendication 4 comprenant, ou dispositif de détermination d'un itinéraire selon la revendication 4 où ledit processeur est configuré pour, une sélection dudit au moins un premier segment de route candidat en tenant compte d'une distance entre ledit au moins un premier segment de route candidat et au moins un segment de route candidat à un instant t0 antérieur à l'instant t1.

6. Procédé ou dispositif de détermination d'un itinéraire selon la revendication 5 où ledit au moins un premier segment de route candidat est sélectionné parmi les segments de route situés à une distance inférieure ou égale à une première distance, dit distance de tolérance de connectivité, de de l'ensemble des segments de route candidats à un instant t0 antérieur à l'instant t1.

7. Procédé ou dispositif de détermination d'un itinéraire selon la revendication 5 ou 6 où la valeur de la première distance de tolérance de connectivité tient compte d'une densité de répartition géographique des stations de bases et d'un rayon médian d'une zone de couverture de stations de base à proximité de ladite première station de base.

8. Procédé de détermination d'un itinéraire selon l'une quelconque des revendications 1 et 3 à 7, ou dispositif de détermination d'un itinéraire selon l'une quelconque des revendications 2 à 7, où la probabilité de connexion est pondérée en fonction d'une déviation d'une direction du premier segment de route candidat avec une direction de référence.

9. Procédé de détermination d'un itinéraire selon l'une quelconque des revendications 1 et 3 à 8, ou dispositif de détermination d'un itinéraire selon l'une quelconque des revendications 2 à 8, où la probabilité de transition $P(s_2 \mid s_1)$ pour un événement réseau donné est déterminée selon la formule suivante :

$$P(s_2 \mid s_1) = \int_{d_{min}}^{d_{max}} f(u) du$$

dans laquelle : s, représente le premier segment de route candidat se situant dans la zone de couverture de ladite première station de base, $s_2$ représente le deuxième segment de route candidat se situant dans la zone de couverture de ladite deuxième station de base, $f(u)$ représente une densité de distribution de distances entre les zones de couverture de la première station de base et de la deuxième station de base, $d_{min}$ représente la distance minimale séparant le premier segment de route candidat et le deuxième segment de route candidat sur un graphe représentant ledit réseau de transport et $d_{max}$ représente la somme de $d_{min}$ avec la longueur du premier segment de route candidat et la longueur du deuxième segment de route candidat.

10. Procédé ou dispositif de détermination d'un itinéraire selon la revendication 9 où la probabilité de transition est déterminée en prenant en compte une densité de distribution de distances entre les zones de couverture de la première station de base et de la deuxième station de base.

11. Procédé de détermination d'un itinéraire selon la revendication 1 ou l'une quelconque des revendications 3 à 6, ou dispositif de détermination d'un itinéraire selon l'une quelconque des revendications 2 à 6, où la probabilité de transition $P(s_2 \mid s_1)$ pour un événement réseau donné est déterminée selon la formule suivante :

$$P(s_2 \mid s_1) = \int_{v_{min}}^{v_{max}} f(v) dv$$

dans laquelle $s_1$ représente le premier segment de route candidat se situant dans la zone de couverture de ladite première station de base, $s_2$ représente le deuxième segment de route candidat se situant dans la zone de couverture de ladite deuxième station de base, $f(v)$ représente une densité de vitesse moyenne de déplacement du terminal mobile, $v_{min} = d_{min}/\Delta t$ où $d_{min}$ représente la distance minimale séparant le premier segment de route candidat et le deuxième segment de route candidat sur un graphe représentant ledit réseau de transport et $v_{max} = d_{max}/\Delta t$ où $d_{max}$ représente la somme de $d_{min}$ avec la longueur du premier segment de route candidat et la longueur du deuxième segment de route candidat et où $\Delta t$ = t1-t2.

12. Procédé de détermination d'un itinéraire selon la revendication 1 ou l'une quelconque des revendications 3 à 6, ou dispositif de détermination d'un itinéraire selon l'une quelconque des revendications 2 à 6, où la probabilité de transition $P(s_2 \mid s_1)$ pour un événement réseau donné est déterminée selon la formule suivante :

$$P(s_2 \mid s_1) = \int_{\theta_{min}}^{\theta_{max}} f(\theta) d\theta$$

dans laquelle s, représente le premier segment de route candidat se situant dans la zone de couverture de ladite première station de base, $s_2$ représente le deuxième segment de route candidat se situant dans la zone de couverture de ladite deuxième station de base, $f(\theta)$ représente une densité de direction moyenne de déplacement du terminal mobile entre les zones de couverture de la première station de base et de la deuxième station de base, $\theta_{min}$ représente la borne inférieure d'une intersection d'un premier secteur angulaire définissant des directions de déplacement possible pour le terminal mobile avec un deuxième secteur angulaire définissant un angle maximum entre une première extrémité du premier segment de route candidat et une deuxième extrémité du deuxième segment de route candidat et $\theta_{max}$ représente la borne supérieure de l'intersection du premier secteur angulaire et du deuxième secteur angulaire.

13. Procédé ou dispositif de détermination d'un itinéraire selon l'une quelconque des revendications 7 à 8 où la probabilité de transition est déterminée en fonction d'au moins deux densités représentatives d'un déplacement du terminal mobile parmi la densité de distribution de distances entre les zones de couverture de la première station de base et de la deuxième station de base $f(u)$, la densité de vitesse moyenne de déplacement du terminal mobile $f(v)$ et la densité de direction moyenne de déplacement du terminal mobile entre les zones de couverture de la première station de base et de la deuxième station de base $f(\theta)$.

14. Procédé ou dispositif de détermination d'un itinéraire selon l'une quelconque des revendications 7 à 9 où la probabilité de transition est pondérée en fonction du nombre d'intersections de segments de route du réseau de transport rencontrés le long de l'itinéraire candidat.

15. Procédé ou dispositif de détermination d'un itinéraire selon l'une quelconque des revendications 7 à 9 où la probabilité de transition est pondérée au moyen d'un coefficient de pénalité représentatif d'un nombre d'intersections de segments de route du réseau de transport rencontrés le long de l'itinéraire candidat, le coefficient de pénalité tendant vers zéro à mesure que le nombre d'intersections augmente.

**Patentansprüche**

1. Verfahren zur Bestimmung einer Route eines mobilen Endgeräts aus Daten, die mehrere Netzwerkereignisse, an denen dieses mobile Endgerät beteiligt ist, betreffen, wobei diese Route aus mindestens einem Routenabschnitt eines Transportnetzwerks besteht, wobei das Verfahren umfasst:

   - eine Bestimmung mindestens einer Kandidatenroute, während der für mindestens ein erstes Netzwerkereignis von den mehreren Netzwerkereignissen bestimmt werden:
   eine Verbindungswahrscheinlichkeit des mobilen Endgeräts mit einer ersten Basisstation, die an dem ersten Netzwerkereignis beteiligt ist, wobei sich das mobile Endgerät zu einem Zeitpunkt t1, zu dem das erste Netzwerkereignis stattgefunden hat, auf einem ersten Kandidatenroutenabschnitt befindet, der sich in einem Versorgungsbereich der ersten Basisstation befindet, und eine Übergangswahrscheinlichkeit, zu einem Zeitpunkt t2, zu dem ein zweites Netzwerkereignis, an dem eine zweite Basisstation beteiligt ist, stattgefunden hat, des Endgeräts zu mindestens einem zweiten Kandidatenroutenabschnitt, der sich in einem Versorgungsbereich der zweiten Basisstation befindet, wobei sich das mobile Endgerät zum Zeitpunkt t1 auf dem ersten Kandidatenroutenabschnitt befindet;
   - Auswahl der Route des mobilen Endgeräts aus der Menge der Kandidatenrouten unter Berücksichtigung der Verbindungswahrscheinlichkeiten und der Übergangswahrscheinlichkeiten, die für die mehreren Netzwerkereignisse bestimmt wurden.

2. Vorrichtung zur Bestimmung einer Route eines mobilen Endgeräts aus Daten, die mehrere Netzwerkereignisse, an denen dieses mobile Endgerät beteiligt ist, betreffen, wobei diese Route aus mindestens einem Routenabschnitt eines Transportnetzwerks besteht, wobei die Vorrichtung einen Prozessor umfasst, der ausgelegt ist zum:

   - Bestimmen mindestens einer Kandidatenroute, indem für mindestens ein erstes Netzwerkereignis von den mehreren Netzwerkereignissen bestimmt werden:

   eine Verbindungswahrscheinlichkeit des mobilen Endgeräts mit einer ersten Basisstation, die an dem ersten Netzwerkereignis beteiligt ist, wobei sich das mobile Endgerät zu einem Zeitpunkt t1, zu dem das erste Netzwerkereignis stattgefunden hat, auf einem ersten Kandidatenroutenabschnitt befindet, der sich in einem Versorgungsbereich der ersten Basisstation befindet, Sendewahrscheinlichkeit genannt, und
   eine Übergangswahrscheinlichkeit, zu einem Zeitpunkt t2, zu dem ein zweites Netzwerkereignis, an dem eine zweite Basisstation beteiligt ist, stattgefunden hat, des Endgeräts zu mindestens einem zweiten Kandidatenroutenabschnitt, der sich in einem Versorgungsbereich der zweiten Basisstation befindet, wobei sich das mobile Endgerät zum Zeitpunkt t1 auf dem ersten Kandidatenroutenabschnitt befindet;

   - Auswählen der benutzten Route aus der Menge der Kandidatenrouten unter Berücksichtigung der Verbindungswahrscheinlichkeiten und der Übergangswahrscheinlichkeiten, die für die mehreren Netzwerkereignisse bestimmt wurden.

3. Verfahren zur Bestimmung einer Route nach Anspruch 1 oder Vorrichtung zur Bestimmung einer Route nach Anspruch 2, wobei die ausgewählte Route diejenige ist, für die ein Produkt der Menge der Verbindungswahrscheinlichkeiten mit der Menge der Übergangswahrscheinlichkeiten, die für die mehreren Netzwerkereignisse bestimmt wurden, am größten ist.

4. Verfahren zur Bestimmung einer Route nach Anspruch 1 oder Anspruch 3 oder Vorrichtung zur Bestimmung einer Route nach Anspruch 2 oder Anspruch 3, wobei die Verbindungswahrscheinlichkeit $P(A \mid s_1)$ für ein gegebenes Netzwerkereignis gemäß der folgenden Formel bestimmt wird:

$$P(A \mid s_1) = \frac{\sum_{j=1}^{n} P(A \mid p_j)}{n}$$

in welcher A die erste Basisstation bezeichnet, die am ersten Ereignis beteiligt ist, $s_1$ den ersten Kandidatenroutenabschnitt bezeichnet, der sich im Versorgungsbereich der ersten Basisstation befindet, $p_j$ ein Pixel einer Likelihood-Karte bezeichnet, die eine Verbindungswahrscheinlichkeit des mobilen Endgeräts mit der ersten Basisstation darstellt, wenn sich das Endgerät auf einem Pixel dieser Likelihood-Karte befindet, und n die Anzahl die Anzahl der Pixel der Likelihood-Karte mit von null verschiedenem Gewicht bezeichnet, die von dem ersten Kandidatenroutenabschnitt $s_1$ durchquert werden.

5. Verfahren zur Bestimmung einer Route nach Anspruch 4, umfassend, oder Vorrichtung zur Bestimmung einer Route nach Anspruch 4, wobei der Prozessor ausgelegt ist für, eine Auswahl des mindestens einen ersten Kandidatenroutenabschnitts unter Berücksichtigung eines Abstands zwischen diesem mindestens einen ersten Kandidatenroutenabschnitt und mindestens einem Kandidatenroutenabschnitt zu einem Zeitpunkt t0, der vor dem Zeitpunkt t1 liegt.

6. Verfahren oder Vorrichtung zur Bestimmung einer Route nach Anspruch 5, wobei der mindestens eine erste Kandidatenroutenabschnitt aus den Routenabschnitten ausgewählt wird, die sich in einem Abstand, der kleiner oder gleich einem ersten Abstand, Konnektivitätstoleranzabstand genannt, von der Menge der Kandidatenroutenabschnitte ist, zu einem Zeitpunkt t0, der vor dem Zeitpunkt t1 liegt, befinden.

7. Verfahren oder Vorrichtung zur Bestimmung einer Route nach Anspruch 5 oder 6, wobei der Wert des ersten Konnektivitätstoleranzabstands eine geografische Verteilungsdichte der Basisstationen und einen mittleren Radius eines Versorgungsbereichs von Basisstationen in der Nähe der ersten Basisstation berücksichtigt.

8. Verfahren zur Bestimmung einer Route nach einem der Ansprüche 1 und 3 bis 7 oder Vorrichtung zur Bestimmung einer Route nach einem der Ansprüche 2 bis 7, wobei die Verbindungswahrscheinlichkeit in Abhängigkeit von einer Abweichung einer Richtung des ersten Kandidatenroutenabschnitts von einer Referenzrichtung gewichtet wird.

9. Verfahren zur Bestimmung einer Route nach einem der Ansprüche 1 und 3 bis 8 oder Vorrichtung zur Bestimmung einer Route nach einem der Ansprüche 2 bis 8, wobei die Übergangswahrscheinlichkeit $P(s_2 \mid s_1)$ für ein gegebenes Netzwerkereignis gemäß der folgenden Formel bestimmt wird:

$$P(s_2 \mid s_1) = \int_{d_{min}}^{d_{max}} f(u)\,du$$

in welcher: $s_1$ den ersten Kandidatenroutenabschnitt bezeichnet, der sich im Versorgungsbereich der ersten Basisstation befindet, $s_2$ den zweiten Kandidatenroutenabschnitt bezeichnet, der sich im Versorgungsbereich der zweiten Basisstation befindet, f(u) eine Verteilungsdichte von Abständen zwischen den Versorgungsbereichen der ersten Basisstation und der zweiten Basisstation bezeichnet, $d_{min}$ den minimalen Abstand bezeichnet, der den ersten Kandidatenroutenabschnitt und den zweiten Kandidatenroutenabschnitt auf einem Graph trennt, der das Transportnetzwerk darstellt, und $d_{max}$ die Summe von $d_{min}$ mit der Länge des ersten Kandidatenroutenabschnitts und der Länge des zweiten Kandidatenroutenabschnitts bezeichnet.

10. Verfahren oder Vorrichtung zur Bestimmung einer Route nach Anspruch 9, wobei die Übergangswahrscheinlichkeit unter Berücksichtigung einer Verteilungsdichte von Abständen zwischen den Versorgungsbereichen der ersten Basisstation und der zweiten Basisstation bestimmt wird.

11. Verfahren zur Bestimmung einer Route nach Anspruch 1 oder einem der Ansprüche 3 bis 6 oder Vorrichtung zur Bestimmung einer Route nach einem der Ansprüche 2 bis 6, wobei die Übergangswahrscheinlichkeit $P(s_2 \mid s_1)$ für ein gegebenes Netzwerkereignis gemäß der folgenden Formel bestimmt wird:

$$P(s_2 \mid s_1) = \int_{v_{min}}^{v_{max}} f(v)\,dv$$

in welcher $s_1$ den ersten Kandidatenroutenabschnitt bezeichnet, der sich im Versorgungsbereich der ersten Basisstation befindet, $s_2$ den zweiten Kandidatenroutenabschnitt bezeichnet, der sich im Versorgungsbereich der zweiten Basisstation befindet, f(v) eine Dichte der mittleren Bewegungsgeschwindigkeit des mobilen Endgeräts bezeichnet, $v_{min} = d_{min}/\Delta t$, wobei $d_{min}$ den minimalen Abstand bezeichnet, der den ersten Kandidatenroutenabschnitt und den zweiten Kandidatenroutenabschnitt auf einem Graph trennt, der das Transportnetzwerk darstellt, und $v_{max} = d_{max}/\Delta t$, wobei $d_{max}$ die Summe von $d_{min}$ mit der Länge des ersten Kandidatenroutenabschnitts und der Länge des zweiten Kandidatenroutenabschnitts bezeichnet und wobei $\Delta t$ = t1-t2 ist.

12. Verfahren zur Bestimmung einer Route nach Anspruch 1 oder einem der Ansprüche 3 bis 6 oder Vorrichtung zur Bestimmung einer Route nach einem der Ansprüche 2 bis 6, wobei die Übergangswahrscheinlichkeit $P(s_2 \mid s_1)$ für ein gegebenes Netzwerkereignis gemäß der folgenden Formel bestimmt wird:

$$P(s_2 \mid s_1) = \int_{\theta_{min}}^{\theta_{max}} f(\theta)d\theta$$

in welcher $s_1$ den ersten Kandidatenroutenabschnitt bezeichnet, der sich im Versorgungsbereich der ersten Basisstation befindet, $s_2$ den zweiten Kandidatenroutenabschnitt bezeichnet, der sich im Versorgungsbereich der zweiten Basisstation befindet, $f(\theta)$ eine Dichte der mittleren Bewegungsrichtung des mobilen Endgeräts zwischen den Versorgungsbereichen der ersten Basisstation und der zweiten Basisstation bezeichnet, $\theta_{min}$ die untere Schranke eines Schnitts eines ersten Winkelsektors, der Richtungen einer möglichen Bewegung für das mobile Endgerät definiert, mit einem zweiten Winkelsektor, der einen maximalen Winkel zwischen einem ersten Ende des ersten Kandidatenroutenabschnitts und einem zweiten Ende des zweiten Kandidatenroutenabschnitts definiert, bezeichnet, und $\theta_{max}$ die obere Schranke des Schnitts des ersten Winkelsektors und des zweiten Winkelsektors bezeichnet.

13. Verfahren oder Vorrichtung zur Bestimmung einer Route nach einem der Ansprüche 7 bis 8, wobei die Übergangswahrscheinlichkeit in Abhängigkeit von mindestens zwei der folgenden für eine Bewegung des mobilen Endgeräts repräsentativen Dichten bestimmt wird, nämlich der Verteilungsdichte von Abständen zwischen den Versorgungsbereichen der ersten Basisstation und der zweiten Basisstation f(u), der Dichte der mittleren Bewegungsgeschwindigkeit des mobilen Endgeräts f(v) und der Dichte der mittleren Bewegungsrichtung des mobilen Endgeräts zwischen den Versorgungsbereichen der ersten Basisstation und der zweiten Basisstation $f(\theta)$.

14. Verfahren oder Vorrichtung zur Bestimmung einer Route nach einem der Ansprüche 7 bis 9, wobei die Übergangswahrscheinlichkeit in Abhängigkeit von der Anzahl von Schnitten von Routenabschnitten des Transportnetzwerks, auf die entlang der Kandidatenroute gestoßen wird, gewichtet wird.

15. Verfahren oder Vorrichtung zur Bestimmung einer Route nach einem der Ansprüche 7 bis 9, wobei die Übergangswahrscheinlichkeit mittels eines Strafkoeffizienten gewichtet wird, der für eine Anzahl von Schnitten von Routenabschnitten des Transportnetzwerks, auf die entlang der Kandidatenroute gestoßen wird, repräsentativ ist, wobei der Strafkoeffizient gegen null strebt, wenn sich die Anzahl von Schnitten erhöht.

**Claims**

1. Method for determining a route of a mobile terminal on the basis of data relating to a plurality of network events involving said mobile terminal, said route consisting of at least one route segment of a transport network, said method comprising:

   - determining at least one candidate route, during which the following are determined for at least one first network event from among the plurality of network events:

     a probability of said mobile terminal connecting to a first base station involved in the first network event, in the knowledge that said mobile terminal is located, at a time t1 at which the first network event occurred, on a first candidate route segment located within a zone of coverage of said first base station, and
     a probability of said terminal transitioning, at a time t2 at which a second network event involving a second base station occurred, to at least one second candidate route segment located within a zone of coverage of said second base station, in the knowledge that the mobile terminal is located on the first candidate route segment at the time t1;

     - selecting said route of said mobile terminal from among the set of candidate routes, taking into account the probabilities of connection and the probabilities of transition determined for the plurality of network events.

2. Device for determining a route of a mobile terminal on the basis of data relating to a plurality of network events involving said mobile terminal, said route consisting of at least one route segment of a transport network, said device comprising a processor configured for the purpose of:

- determining at least one candidate route by determining the following for at least one first network event from among the plurality of network events:

a probability of said mobile terminal connecting to a first base station involved in the first network event, in the knowledge that said mobile terminal is located, at a time t1 at which the first network event occurred, on a first candidate route segment located within a zone of coverage of said first base station, referred to as probability of transmission, and

a probability of said terminal transitioning, at a time t2 at which a second network event involving a second base station occurred, to at least one second candidate route segment located within a zone of coverage of said second base station, in the knowledge that the mobile terminal is located on the first candidate route segment at the time t1;

- selecting said taken route from among the set of candidate routes, taking into account the probabilities of connection and the probabilities of transition determined for the plurality of network events.

3. Method for determining a route according to Claim 1, or device for determining a route according to Claim 2, where said selected route is the one for which a product of the set of probabilities of connection and the set of probabilities of transition determined for the plurality of network events is the highest.

4. Method for determining a route according to Claim 1 or Claim 3, or device for determining a route according to Claim 2 or Claim 3, where the probability of connection $P(A \mid s_1)$ for a given network event is determined using the following formula:

$$P(A \mid s_1) = \frac{\sum_{j=1}^{n} P(A \mid p_j)}{n}$$

wherein A represents the first base station involved in the first event, $s_1$ represents the first candidate route segment located within the zone of coverage of said first base station, $p_j$ represents a pixel of a likelihood map representing a probability of said mobile terminal connecting to the first base station when the terminal is located on a pixel of said likelihood map, and n represents the number of pixels of said likelihood map of non-zero weight passed through by the first candidate route segment $s_1$.

5. Method for determining a route according to Claim 4, comprising, or device for determining a route according to Claim 4, where said processor is configured for the purpose of, selecting said at least one first candidate route segment taking into account a distance between said at least one first candidate route segment and at least one candidate route segment at a time t0 prior to the time t1.

6. Method or device for determining a route according to Claim 5, where said at least one first candidate route segment is selected from among route segments located at a distance less than or equal to a first distance, referred to as connectivity tolerance distance, of the set of candidate route segments at a time t0 prior to the time t1.

7. Method or device for determining a route according to Claim 5 or 6, where the value of the first connectivity tolerance distance takes into account a density of the geographical distribution of the base stations and a median radius of a zone of coverage of base stations in the proximity of said first base station.

8. Method for determining a route according to any one of Claims 1 and 3 to 7, or device for determining a route according to any one of Claims 2 to 7, where the probability of connection is weighted as a function of a deviation of a direction of the first candidate route segment from a reference direction.

9. Method for determining a route according to any one of Claims 1 and 3 to 8, or device for determining a route according to any one of Claims 2 to 8, where the probability of transition $P(s_2 \mid s_1)$ for a given network event is determined using the following formula:

$$P(s_2 \mid s_1) = \int_{d_{min}}^{d_{max}} f(u)du$$

wherein: $s_1$ represents the first candidate route segment located within the zone of coverage of said first base station, $s_2$ represents the second candidate route segment located within the zone of coverage of said second base station, f(u) represents a density of the distribution of distances between the zones of coverage of the first base station and of the second base station, $d_{min}$ represents the minimum distance between the first candidate route segment and the second candidate route segment on a graph representing said transport network and $d_{max}$ represents the sum of $d_{min}$ with the length of the first candidate route segment and the length of the second candidate route segment.

10. Method or device for determining a route according to Claim 9, where the probability of transition is determined taking into account a density of the distribution of distances between the zones of coverage of the first base station and of the second base station.

11. Method for determining a route according to Claim 1 or any one of Claims 3 to 6, or device for determining a route according to any one of Claims 2 to 6, where the probability of transition $P(s_2 \mid s_1)$ for a given network event is determined using the following formula:

$$P(s_2 \mid s_1) = \int_{v_{min}}^{v_{max}} f(v)dv$$

wherein $s_1$ represents the first candidate route segment located within the zone of coverage of said first base station, $s_2$ represents the second candidate route segment located within the zone of coverage of said second base station, f(v) represents an average speed of movement density of the mobile terminal, $v_{min} = d_{min}/\Delta t$ where $d_{min}$ represents the minimum distance between the first candidate route segment and the second candidate route segment on a graph representing said transport network and $v_{max} = d_{max}/\Delta t$ where $d_{max}$ represents the sum of $d_{min}$ with the length of the first candidate route segment and the length of the second candidate route segment and where $\Delta t$ = t1-t2.

12. Method for determining a route according to Claim 1 or any one of Claims 3 to 6, or device for determining a route according to any one of Claims 2 to 6, where the probability of transition $P(s_2 \mid s_1)$ for a given network event is determined using the following formula:

$$P(s_2 \mid s_1) = \int_{\theta_{min}}^{\theta_{max}} f(\theta)d\theta$$

wherein $s_1$ represents the first candidate route segment located within the zone of coverage of said first base station, $s_2$ represents the second candidate route segment located within the zone of coverage of said second base station, $f(\theta)$ represents an average direction of movement density of the mobile terminal between the zones of coverage of the first base station and of the second base station, $\theta_{min}$ represents the lower bound of an intersection of a first angular sector defining possible directions of movement for the mobile terminal with a second angular sector defining a maximum angle between a first end of the first candidate route segment and a second end of the second candidate route segment and $\theta_{max}$ represents the upper bound of the intersection of the first angular sector and of the second angular sector.

13. Method or device for determining a route according to either one of Claims 7 and 8, where the probability of transition is determined as a function of at least two densities representative of a movement of the mobile terminal from among the density of the distribution of distances between the zones of coverage of the first station and of the second base station f(u), the average speed of movement density of the mobile terminal f(v) and the average speed of movement density of the mobile terminal between the zones of coverage of the first base station and of the second base station $f(\theta)$.

14. Method or device for determining a route according to any one of Claims 7 to 9, where the probability of transition is weighted as a function of the number of intersections of route segments of the transport network that are encountered along the candidate route.

**15.** Method or device for determining a route according to any one of Claims 7 to 9, where the probability of transition is weighted by way of a penalty coefficient representative of a number of intersections of route segments of the transport network that are encountered along the candidate route, the penalty coefficient tending towards zero as the number of intersections increases.

[fig. 1]

Fig. 1

[fig. 2A]

Fig. 2A

[fig. 2B]

Fig. 2B

[fig. 3]

Fig. 3

[fig. 4]

Fig. 4

[fig. 5]

Fig. 5

[fig. 6]

Fig. 6

[fig. 7A]

Fig. 7A

[fig. 7B]

Fig. 7B

[fig. 8]

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3046006 A1

**Littérature non-brevet citée dans la description**

- **COLERI ERGEN SINEM et al.** RSSI-Fingerprinting-Based Mobile Phone Localization With Route Constraints. *IEE TRANSACTIONS ON VEHICULAR TECHNOLOGY*, vol. 63 (1), 423-428

- **LV JINHUA et al.** BSLoc : Base Station ID-Based Telco Outdoor Localization. *ADVANCES IN DATABASES AND INFORMATION SYSTEMS*, 206-219